# EUROPÄISCHE PATENTSCHRIFT

(11) **EP 1 612 231 B1**
(45) Veröffentlichungstag und Bekanntmachung des Hinweises auf die Patenterteilung: **24.03.2010**
(21) Anmeldenummer: 05013186.1
(22) Anmeldetag: 18.06.2005
(51) Int. Cl.: C08G 64/30, C08G 64/40

(54) **Inhibierung von katalytisch aktiven Verunreinigungen in Polycarbonat nach dem Schmelzeumesterungsverfahren**
Inhibition of catalyst-active impurities in polycarbonate transesterification process
Inhibition d'impuretés de catalyseurs actives dans le procédé de transesterification de polycarbonate

(30) Priorität: 01.07.2004 DE 102004032125; 27.11.2004 DE 102004057348
(43) Veröffentlichungstag der Anmeldung: 04.01.2006
(73) Patentinhaber: Bayer MaterialScience AG, 51368 Leverkusen (DE)
(72) Erfinder: Heuer, Helmut-Werner, Dr., 47829 Krefeld (DE); Möthrath, Melanie, Dr., 40223 Düsseldorf (DE); Snobl, Peter, 47239 Duisburg (DE); Bunzel, Lothar, 47906 Kempen (DE); Pfingst, Thomas, 47918 Tönisvorst (DE); Buts, Marc, 2570 Duffel (BE); Simon, Lydia, Dr., Xin Qiao, Song Jiang Shanghai 201612 (CN)

(56) Entgegenhaltungen:
- US-A- 5 606 007

## Beschreibung

Gegenstand dieser Erfindung ist ein Verfahren zur Herstellung von Polycarbonat, wobei Ester von organischen Schwefel-enthaltenden Säuren zwischen Mittel- und Hochviskosreaktor zugesetzt werden sowie die Verwendung dieser Ester zur Inhibierung von katalytisch aktiven Verunreinigungen bei der Herstellung von Polycarbonat nach dem Schmelzeumesterungsverfahren.

Die Herstellverfahren für Polycarbonat sind literaturbekannt und in vielen Anmeldungen beschrieben:

Zur Herstellung von Polycarbonaten nach dem Phasengrenzflächen- oder dem Schmelzeumesterungsverfahren sei beispielhaft auf "Schnell", Chemistry and Physics of Polycarbonates, Polymer Reviews, Vol. 9, Interscience Publishers, New York, London, Sydney 1964, S. 33 ff. und auf Polymer Reviews, Volume 10, "Condensation Polymers by Interfacial and Solution Methods", Paul W. Morgan, Interscience Publishers, New York 1965, Kap. VIII, S. 325 verwiesen.

Schmelzepolycarbonate können nach der Herstellung katalytisch aktive, basische Verunreinigungen enthalten. Diese sind zum einen durch nicht abgetrennte geringfügige Verunreinigungen der Ausgangssubstanzen, durch nicht abgetrennte basische Reste von thermisch zersetzbaren Katalysatoren oder durch nicht abgetrennte stabile basische Katalysatorsalze zu begründen. Unter thermisch zersetzbaren Katalysatoren sind zum Beispiel sogenannte Onium-Salze zu verstehen. Unter thermisch stabilen Katalysatoren sind beispielsweise Alkali- bzw. Erdalkalisalze zu verstehen. Diese basischen Substanzen im Polycarbonat sind im höchsten Maße unerwünscht, da sie eine katalytische Aktivität des Materials unterstützen.

So können beim Einmischen von Additiven in die Polycarbonatschmelze basische Substanzen chemische Reaktionen der Additive, wie beispielsweise den Einbau in die Polymerkette sowie den Abbau der Additive, unterstützen, die die Wirksamkeit der Additive negativ beeinflussen. Die bei optischen Schmelzepolycarbonattypen übliche thermische Reduktion der Restmonomere unter konstantem Molekulargewicht gelingt ebenfalls nicht in Anwesenheit katalytisch aktiver, basischer Verunreinigungen (siehe WO 051 054 335). Katalytisch aktive Verbindungen im Polycarbonat führen weiterhin zu Abbaureaktionen des Polycarbonats bei den üblichen thermischen Weiterverarbeitungsschritten wie beispielsweise Spritzgießen.

Deshalb werden den Polycarbonaten üblicherweise Inhibitoren zugesetzt werden. Unter Inhibitoren werden alle Verbindungen verstanden, die die Kinetik von chemischen Reaktionen entscheidend hemmen, so dass qualitätsmindernde Veränderungen im Polymeren vermieden werden.

Literaturbekannt ist die Deaktivierung der katalytisch aktiven, basischen Verunreinigungen im Schmelzepolycarbonat mit Hilfe von sauren Verbindungen und deren Estern. Dabei ist äußerst wichtig, dass die eingesetzten Inhibitoren keine freien Säuren im Überschuss bilden, da diese ebenfalls chemische Reaktionen der Polymere zum Beispiel mit den Additiven unterstützen.

Schon Schnell et al. beschreiben in DE-A 1 031 512 die Neutralisation von basischen Katalysatoren durch Zugabe von sauren Komponenten. Es wird dort auch erwähnt, dass man nach der Neutralisation durch Anlegen von Vakuum die überschüssig eingesetzte Säure entfernen kann.

In EP-A 435 124 wird die Desaktivierung von alkalischen Katalysatoren im Schmelzepolycarbonat durch Zugabe einer Säure bzw. eines einfachen Säureesters einer Säure, die ein Schwefelatom enthält, beschrieben. Hier wird die überschüssige Säure vor einer Restmonomerenreduzierung unter Vakuum durch Zugabe von Epoxiden wieder neutralisiert. Als saure Komponenten werden zum Beispiel Phosphorsäure, Touolsulfonsäure, Methyltosylat und Ethyltosylat dargelegt.

DE-A 4 438 545 beschreibt die Vermengung eines Schmelzepolycarbonats mit einer sauren Komponente bzw. deren Ester, die einen pKa-Wert < 5 hat, zur Neutralisation des basischen Umesterungskatalysators vor der Reduktion der Restmonomere im Vakuum. Als saure Komponenten werden beispielsweise Phosphorsäure, Toluolsulfonsäure und entsprechende Ester beschrieben.

In WO 00 07799 werden vor der Restmonomerenreduktion eines Schmelzepolycarbonats unter Vakuum die alkalischen Katalysatoren durch Zugabe von Oniumsalzen, wie Tetraalkylphosphonium- und -ammonium-Salze, der Dodecylbenzolsulfonsäure inhibiert.

Aus WO 02 46272 ist die Verwendung einer Kombination von S-enthaltenden Quenchern mit Phosphorsäure und Wasser und Glycerinmonostearat (GMS) für Schmelzepolycarbonat bekannt. So können bei genau abgestimmter Zugabe die Restmonomere entfernt werden, und GMS kann als Entformungsmittel ohne unerwünschte Nebenreaktion zugesetzt werden. Unter die beschriebenen wirksamen Quencher fallen einfache Alkyl-Benzol- bzw. Toluolsulfonsäureester sowie Phosphonium- und Ammoniumsalze p-substituierter Benzolsulfonsäuren. Bevorzugt wird Butyltosylat eingesetzt.

Als nachteilig erweisen sich bei vielen der beschriebenen Desaktivatoren, besonders bei den freien Säuren und leicht spaltbaren Estern, ihre korrosiven Eigenschaften bei hohen Temperaturen und Konzentration, wie sie beispielsweise bei einer technischen Dosierung der Inhibitoren auftreten können. Es ist von großem Vorteil, Inhibitoren einzusetzen, die die Werkstoffe der Apparate nicht in Mitleidenschaft ziehen, um Partikeln, metallischen Kationen und Sicherheitsmängeln vorzubeugen. Weiterhin sind der überwiegende Teil der beschriebenen Quencher bei den üblicherweise verwendeten Bedingungen in den Aggregaten zur Restmonomerenentfernung beim Schmelzepolycarbonat und bei der Dosierung in den Schmelzepolycarbonat-Schmelzestrom flüchtig. Werden bei längeren Verweilzeiten unter erhöhten Temperaturen und Vakuum die Restmonomere entfernt (wie in WO 051 054 335 beschrieben), so kann ein großer Teil der Quencher verloren gehen und damit die Effizienz der Quencher stark vermindert werden. Die unabdingbare konstante und saubere Dosierung der Quencher bei einer kontinuierlichen Einmischung in den Schmelzestrom wird durch eine erhöhte Flüchtigkeit ebenfalls stark erschwert. Die zugesetzten Komponenten, wie z.B. Phosphorsäure, können außerdem in dem anschließenden Entgasungsschritt mit den anderen flüchtigen Bestandteilen vom Polycarbonat abgetrennt werden, sich in der Anlage anreichern und durch Korrosion zur Schäden an der Anlage führen. Wenn die abgetrennten Komponenten einschließlich der Komponenten, die die Aktivität des Katalysators hemmen, wieder in den Kreislauf der Anlage zurückgeführt werden, so sind außerdem nachteilige Effekte auf die Durchführung der Reaktion zu erwarten. Es kann so ein Katalysatorquencher in den Herstellprozess des Polycarbonates zurückgeführt werden und auf diese Weise den Reaktionsfortschritt hemmen. Auch können Korrosionsschäden in dem Brüdensystem, in dem die abgespaltenen Verbindungen aufgearbeitet werden, auftreten.

Quartäre Oniumsalze von para-subsituierten Benzolsulfonsäuren, wie in WO 00 07799 beschrieben, sind zwar weniger flüchtig, weisen aber durch eine geringe Löslichkeit in bevorzugt verwendeten Lösungsmitteln einen eklatanten Nachteil auf. So müssen sie laut WO 00 07799 zur Dosierung aufwendig in Wasser dispergiert werden. Eine kontinuierlich konstante Dosierung einer Suspension in äußerst kleinen Mengen gilt technisch als schwierig. Unter bevorzugt verwendeten Lösungsmittel werden Wasser und dem Verfahren inhärente Lösungsmittel wie Phenol verstanden.

Ein weiterer Nachteil vieler Säureesterquencher ist, dass sie zu schnell große Mengen an freien Säuren generieren. Ein Überschuss an freier Säure katalysiert beispielsweise Reaktionen der Polycarbonate mit Additiven oder fördert sogar Rückreaktionen des Polycarbonats mit Phenol unter Freisetzung von Diphenylcarbonat. Kleine Mengen an überschüssiger ester-gebundener Säure, die die freie Säure sehr langsam unter thermischer Belastung bei einer Weiterverarbeitung des gequenchten Polycarbonats freisetzen, sind dagegen durchaus gewünscht. Sie erhöhen die thermische Belastbarkeit des Polycarbonats.

Es stellte sich daher, ausgehend vom Stand der Technik, die Aufgabe, Inhibitoren für das Quenchen von katalytisch aktiven Verunreinigungen im Polycarbonat zu finden, welche nicht korrosiv und schwer flüchtig sind sowie gleichzeitig leicht löslich und dosierbar in Prozess inhärenten Lösungsmitteln sind. Ebenfalls sollten die Inhibitoren nie größere Überschüsse an freier Säure im Polycarbonat generieren, um Abbaureaktionen von Polycarbonat unter Bildung von Carbonaten zu vermeiden oder auch Reaktionen mit den Additiven zu unterbinden. Statt dessen ist eine langsame Generierung der freien Säuren gewünscht. Dabei ist besonders wünschenswert, wenn der Inhibitor während der Einarbeitung in das Polycarbonat und eventuellen Folgeschritten nicht komplett alle mögliche freie Säure bildet. So kann er bei einer Weiterverarbeitung nach Granulierung des gequenchten Polycarbonats, wie zum Beispiel Spritzgießen, erneut Wirkung zeigen.

Überraschend wurde nun gefunden, dass Ester von organischen Schwefel-enthaltenden Säuren die gewünschten Eigenschaften ausgewogen vereinigen und hervorragend zur Inhibierung von katalytisch aktiven Verunreinigungen in Polycarbonaten geeignet sind. So setzen diese Stabilisatoren überraschenderweise nur langsam und in Stufen die korrespondieren freien Säuren frei. Außerdem sind sie an sich so wenig flüchtig, dass sie auch bei längeren Verweilzeiten kaum aus der Polycarbonatschmelze ausdampfen. Überraschenderweise zeigen die Stabilisatoren auch bei hohen Temperaturen und Konzentrationen kein korrosives Verhalten gegenüber den üblicherweise verwendeten metallischen Werkstoffen wie beispielsweise 1.4571 oder 1. 4541 (Stahlschlüssel 2001, Verlag: Stahlschlüssel Wegst GmbH, Th-Heuss-Straße 36, D-71672 Marbach) und Ni-Basislegierungen vom Typ C, wie z. B. 2.4605 oder 2.4610 (Stahlschlüssel 2001, Verlag: Stahlschlüssel Wegst GmbH, Th-Heuss-Straße 36, D-71672 Marbach).

Dies ist insbesondere erstaunlich, als man bei der Inhibierung von katalytisch aktiven Verunreinigungen in Polycarbonaten im Allgemeinen keine Voraussagen treffen kann, ob die Inhibitoren die gewünschten Eigenschaften wie schwache Flüchtigkeit, Löslichkeit in prozessinhärenten Lösungsmitteln, Korrosionsfreiheit und langsame Säurefreisetzung im richtigen Maß vereinigen.

Gegenstand dieser Erfindung ist daher ein Verfahren zur Herstellung von Polycarbonat; dadurch gekennzeichnet, dass folgende Ester von organischen Schwefel-enthaltenden Säuren zwischen Mittel- und Hochviskosreaktor zugesetzt werden.

Weiterhin ist Gegenstand der Erfindung die Verwendung von Estern von organischen Schwefel-enthaltenden Säuren zur Inhibierung von katalytisch aktiven Verunreinigungen der bei der Herstellung von Polycarbonat nach dem Schnelzeumesterungsverfahren.

Erfindungsgemäß geeignete Inhibitoren sind Ester von organischen Schwefel-enthaltenden Säuren, ausgewählt aus mindestens einer Verbindung

### a) der Formel (I)

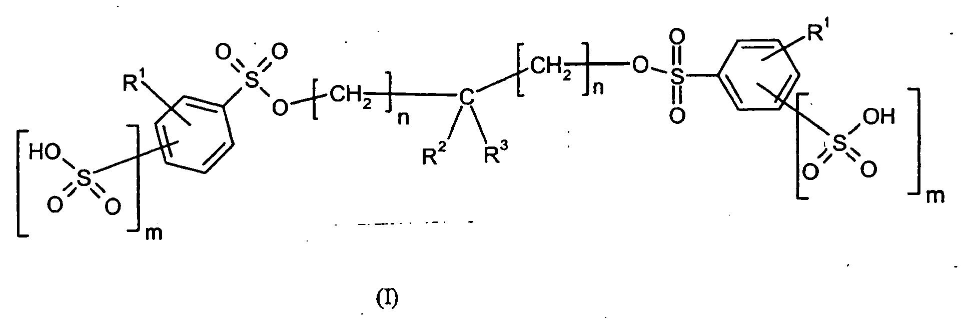

in welcher
- R¹: unabhängig für Wasserstoff oder für C₁-C₂₀-Alkyl, vorzugsweise für C₁-C₈-Alkyl, besonders bevorzugt für unsubstituiertes C₁-C₆-Alkyl, ganz besonders bevorzugt für C₁-C₄-Alkyl, wobei Alkyl durch Halogen substituiert sein kann, insbesondere für Wasserstoff oder Methyl steht,
- R² und R³: unabhängig voneinander für Wasserstoff, oder für C₁-C₆-Alkyl, C₄-C₃₀-Alkylcarboxyl, vorzugsweise C₁-C₄-Alkyl, C₆-C₂₅-Alkylcarboxyl, besonders bevorzugt für C₈-C₂₀-Alkylcarboxyl, insbesondere für Wasserstoff, C₁₇-Alkylcarboxyl oder C₁₅-Alkylcarboxyl oder
für den Rest 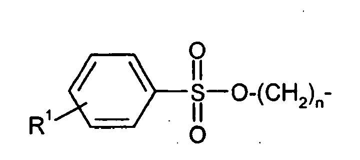 stehen,
worin
- R¹: die oben genannte Bedeutung hat,
- m: unabhängig voneinander für 0 oder 1 steht,
- n: für eine ganze Zahl von 0 bis 8, vorzugsweise 0 bis 6, insbesondere 0, 1 oder 2 steht,

### b) der Formel (IV)

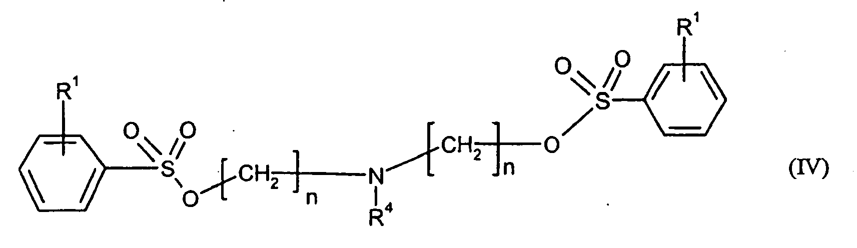

in welcher
- R¹ und n: die oben genannte Bedeutung haben, und
- R⁴: für C₄-C₃₀-Alkylcarboxyl, vorzugsweise C₆-C₂₅-Alkylcarboxyl, besonders bevorzugt für C₈-C₂₀-Alkylcarboxyl, insbesondere für C₁₇-Alkylcarboxyl oder C₁₅-Alkylcarboxyl oder
für folgenden Rest 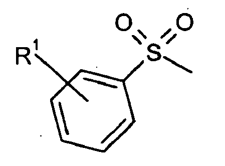 wobei R¹ die oben genannte Bedeutung hat,
steht
und

### c) der Formel (V), (VI), (VIIa), (VIIb), (Ib), (IVa)

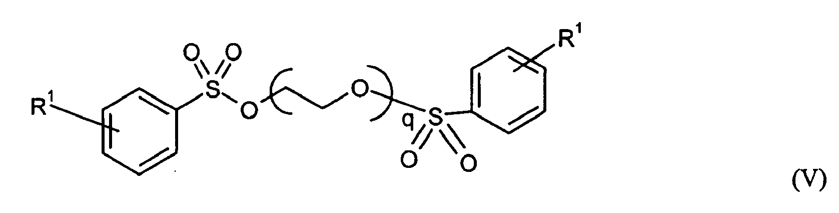

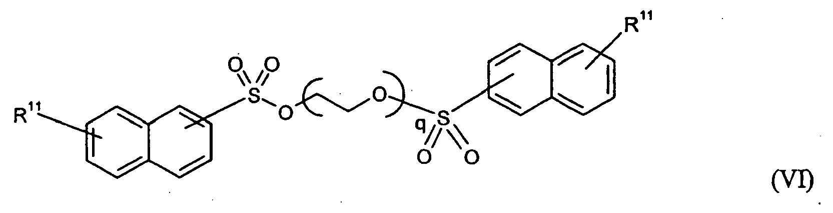

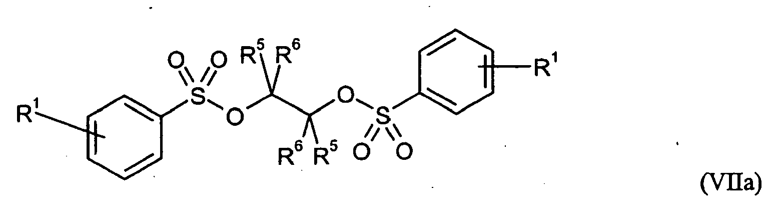

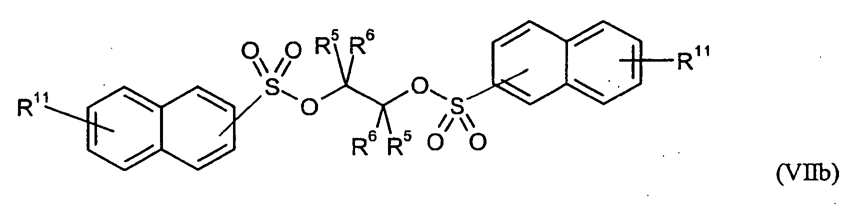

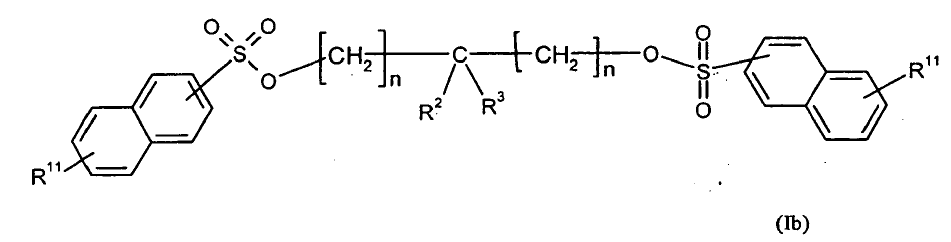

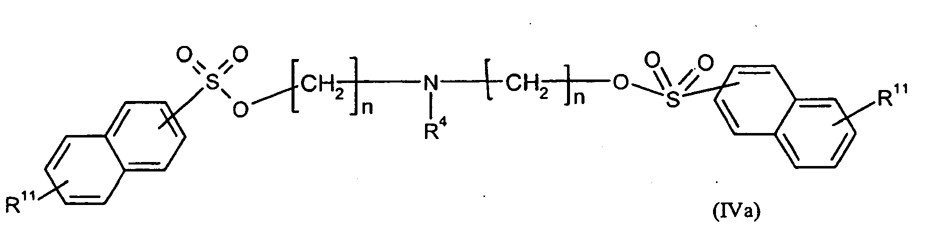

in welcher
- R¹ und n: die oben genannte Bedeutung haben, und
- q: für eine ganze Zahl von 0 bis 10, vorzugsweise 1 bis 8, insbesondere 1 bis 5 steht, und
- R⁵ und R⁶: unabhängig für Wasserstoff oder für C₁-C₂₀-Alkyl, vorzugsweise für C₁-C₈-Alkyl, besonders bevorzugt für C₁-C₆-Alkyl, ganz besonders bevorzugt für C₁-C₄-Alkyl, wobei Alkyl durch Halogen substituiert sein kann, insbesondere für Wasserstoff oder Methyl steht, und
- R¹¹: unabhängig für Wasserstoff oder Di-(C₁-C₄)-Alkylamino, vorzugsweise für Wasserstoff oder Dimethylamino steht, und

Bevorzugt sind folgende Inhibitoren der Formeln (Ia) bis (If), , (IVb), (Va), und (Vb) ):

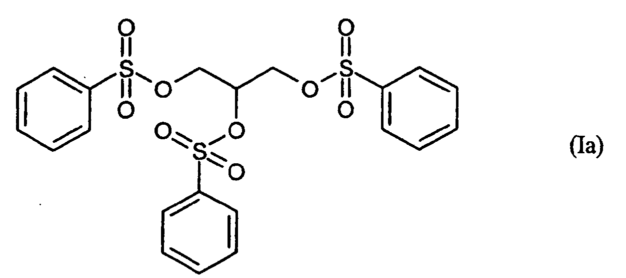

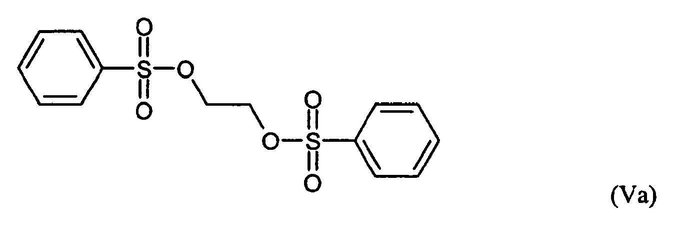

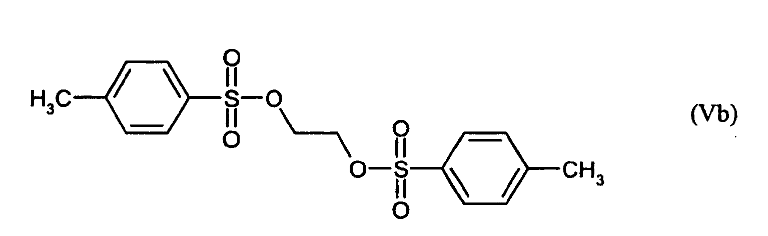

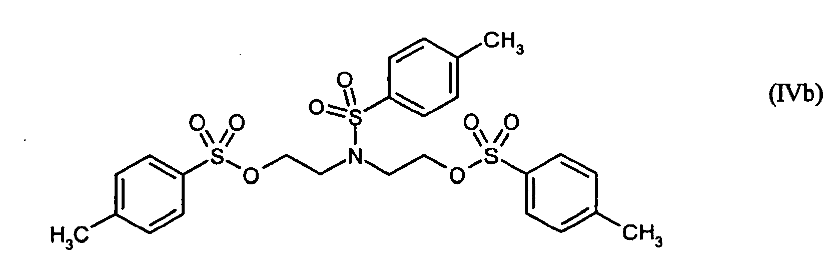

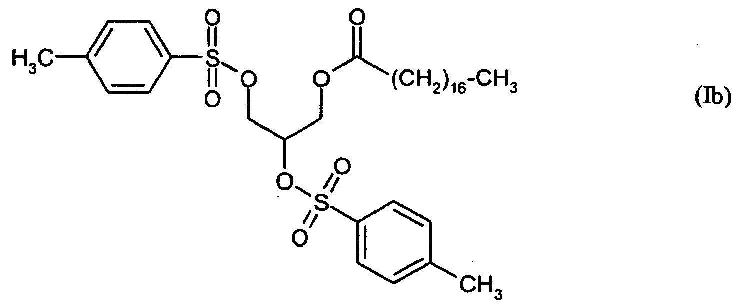

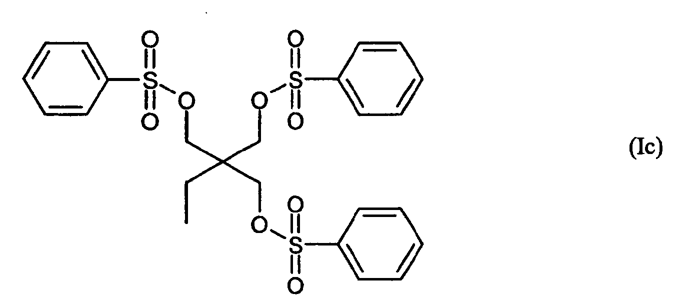

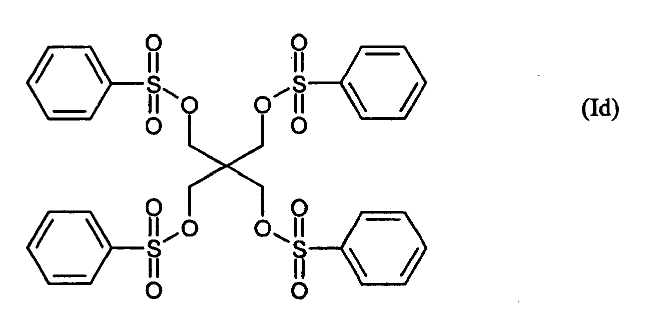

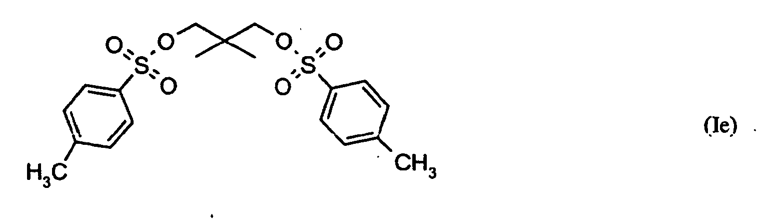

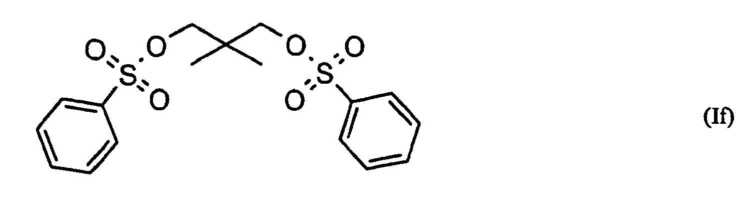

Die erfindungsgemäßen Inhibitoren können einzeln oder in beliebigen Mischungen oder mehreren verschiedenen Mischungen der Polymerschmelze zugesetzt werden. Die erfindungsgemäßen Inhibitoren können auch in Mischungen mit freien Säuren, wie beispielsweise para-Toulolsulfonsäure oder ortho-Phosphorsäure, zugesetzt werden.

Die Herstellung der erfindungsgemäßen verbrückten Ester von organischen Schwefel-enthaltenden Säuren erfolgt nach üblichen Methoden beispielsweise durch Alkoholyse aus dem Benzolsulfonsäurechlorid bzw. Toluolsulfonsäurechlorid mit den entsprechenden mehrfunktionellen Alkoholen (vgl. Organikum, Wiley-VCH Verlag, 20. Auflage, Weinheim, S. 606 /1999).

Das Polycarbonat kann beispielsweise nach dem Schmelzeumesterungsverfahren hergestellt werden. Die Herstellung von aromatischen Oligo- bzw. Polycarbonaten nach dem Schmelzumesterungsverfahren ist literaturbekannt und beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie in der DE-C 10 31 512, US-A 3,022,272, US-A 5,340,905 und US-A 5,399,659 vorbeschrieben.

Gemäß diesem Verfahren werden aromatische Dihydroxyverbindungen, mit Kohlensäurediestern unter Zuhilfenahme von geeigneten Katalysatoren und gegebenenfalls weiteren Zusatzstoffen in der Schmelze umgeestert.

Zur Durchführung des Verfahrens kann beispielsweise eine Anlagenkonzeption, wie sie in WO 02/077 067 dargestellt ist, benutzt werden.

Für die Herstellung von Polycarbonaten sind geeignete Dihydroxyarylverbindungen solche der Formel (XII)

HO-Z-OH (XII)

in welcher Z ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Beispiele für Dihydroxyarylverbindungen sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole, sowie deren kemalkylierte und kernhalogenierte Verbindungen.

Diese und weitere geeignete andere Dihydroxyarylverbindungen sind z.B. in den US-Patentschriften 2 970 131, 2 991 273, 2 999 835, 2 999 846, 3 028 365, 3 062 781, 3 148 172, 3 271 367, 3 275 601, 4 982 014, in den deutschen Patentschriften 1 570 703, 2 063 050, 2 036 052, 2 211 956, 3 832 396, der französischen Patentschrift 1 561 518, und in der Monographie "H. Schnell, Chemistry and Physics of Polycarbonates, Interscience Publishers, New York 1964", S. 28ff; S.102ff", und in "D.G. Legrand, J.T. Bendler, Handbook of Polycarbonate Science and Technology, Marcel Dekker New York 2000, S. 72ff." beschrieben.

Bevorzugte Dihydroxyarylverbindungen sind beispielsweise: Resorcin, 4,4'-Dihydroxydiphenyl, Bis-(4-hydroxyphenyl)-methan, Bis-(3,5-dimethyl-4-hydroxyphenyl)-methan, Bis-(4-hydroxyphenyl)-diphenyl-methan, 1,1-Bis-(4-hydroxyphenyl)-1-phenyl-ethan, 1,1-Bis-(4-hydroxyphenyl)-1-(1-naphthyl)-ethan, 1,1-Bis-(4-hydroxyphenyl)-1-(2-naphthyl)-ethan, 2,2-Bis-(4-hydroxyphenyl)-propan, 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-1-phenyl-propan, 2,2-Bis-(4-hydroxyphenyl)-hexafluor-propan, 2,4-Bis-(4-hydroxyphenyl)-2-methyl-butan, 2,4-Bis-(3,5-dimethyl-4-hydroxyphenyl)-2-methylbutan, 1, 1-Bis-(4-hydroxyphenyl)-cyclohexan, 1, 1-Bis-(3,5-dimethyl-4-hydroxyphenyl)-cylohexan, 1, 1-Bis-(4-hydroxyphenyl)-4-methyl-cylohexan, 1, 1-Bis-(4-hydroxyphenyl)-3,3,5-trimethyl-cyclohexan, 1,3-Bis-[2-(4-hydroxyphenyl)-2-propyl]-benzol, 1,1'- Bis-(4-hydroxyphenyl)-3-diisopropyl-benzol, 1,1'-Bis-(4-hydroxyphenyl)-4-diisopropyl-benzol, 1,3-Bis-[2-(3,5-dimethyl-4-hydroxyphenyl)-2-propyl]-benzol, Bis-(4-hydroxyphenyl)-ether, Bis-(4-hydroxyphenyl)-sulfid, Bis-(4-hydroxyphenyl)-sulfon, Bis-(3,5-dimethyl-4-hydroxyphenyl)-sulfon und 2,2',3,3'-Tetrahydro-3,3,3',3'-tetramethyl-1,1'-spirobi-[1H-inden]-5,5'-diol.

Besonders bevorzugte Dihydroxyarylverbindungen sind: Resorcin, 4,4'-Dihydroxydiphenyl, Bis-(4-hydroxyphenyl)-diphenyl-methan, 1,1-Bis-(4-hydroxyphenyl)-1-phenyl-ethan, Bis-(4-hydroxyphenyl)-1-(1-naphthyl)-ethan, Bis-(4-hydroxyphenyl)-1-(2-naphthyl)-ethan, 2,2-Bis-(4-hydroxyphenyl)-propan, 2,2-Bis(3,5-dimethyl-4-hydroxyphenyl)-propan, 1,1 -Bis-(4-hydroxyphenyl)-cyclohexan, 1,1-Bis-(3,5-dimethyl-4-hydroxyphenyl)-cyclohexan, 1,1-Bis-(4-hydroxyphenyl)-3,3,5-trimethyl-cyclohexan, 1,1'-Bis-(4-hydroxyphenyl)-3-diisopropyl-benzol und 1,1'- Bis-(4-hydroxyphenyl)-4-diisopropyl-benzol.

Ganz besonders bevorzugt sind: 4,4'-Dihydroxydiphenyl, 2,2-Bis-(4-hydroxyphenyl)-propan und Bis-(4-hydroxyphenyl)-3,3,5-trimethyl-cyclohexan.

Es können sowohl eine Dihydroxyarylverbindung unter Bildung von Homopolycarbonaten als auch verschiedene Dihydroxyarylverbindungen unter Bildung von Copolycarbonaten verwendet werden.

Anstelle der monomeren Dihydroxyarylverbindungen können auch niedermolekulare, überwiegend OH-endgruppengestoppte Oligocarbonate als Ausgangsverbindung eingesetzt werden.

Die Dihydroxyarylverbindungen können auch mit Restgehalten der Monohydroxyarylverbindungen, aus denen sie hergestellt wurden bzw. die niedermolekularen Oligocarbonate mit Restgehalten der Monohydroxyarylverbindungen, die bei der Herstellung der Oligomeren abgespalten wurden, eingesetzt werden. Die Restgehalte der Monomerhydroxyarylverbindungen können bis zu 20 %, vorzugsweise 10 %, besonders bevorzugt bis 5 % und ganz besonders bevorzugt bis zu 2 % betragen (s. z.B. EP-A 1 240 232).

Die verwendeten Dihydroxyarylverbindungen, wie auch alle anderen der Synthese zugesetzten Rohstoffe, Chemikalien und Hilfsstoffe können mit den aus ihrer eigenen Synthese, Handhabung und Lagerung stammenden Verunreinigungen kontaminiert sein, obwohl es wünschenswert und Ziel ist, mit möglichst sauberen Rohstoffen, Chemikalien und Hilfsstoffen zu arbeiten.

Die für die Umsetzung mit den Dihydroxyarylverbindungen geeigneten Diarylcarbonate sind solche der Formel (XIII) 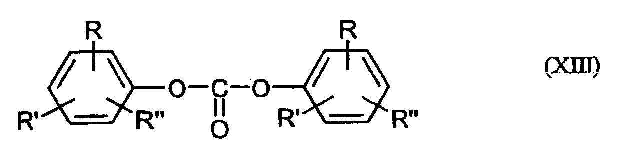 wobei R, R' und R" unabhängig voneinander gleich oder verschieden für Wasserstoff, gegebenenfalls verzweigtes C₁-C₃₄ Alkyl, C₇-C₃₄-Alkylaryl oder C₆-C₃₄-Aryl stehen, R weiterhin auch -COO-R''' bedeuten kann, wobei R''' für Wasserstoff, gegebenenfalls verzweigtes C₁-C₃₄ Alkyl, C₇-C₃₄-Alkylaryl oder C₆-C₃₄-Aryl steht.

Solche Diarylcarbonate sind beispielsweise: Diphenylcarbonat, Methylphenyl-phenyl-carbonate und Di-(methylphenyl)-carbonate, 4-Ethylphenyl-phenyl-carbonat, Di-(4-ethylphenyl)-carbonat, 4-n-Propylphenyl-phenyl-carbonat, Di-(4-n-propylphenyl)-carbonat, 4-iso-Propylphenyl-phenyl-carbonat, Di-(4-iso-propylphenyl)-carbonat, 4-n-Butylphenyl-phenyl-carbonat, Di-(4-n-butylphenyl)-carbonat, 4-iso-Butylphenyl-phenyl-carbonat, Di-(4-iso-butylphenyl)-carbonat, 4-tert-Butylphenyl-phenyl-carbonat, Di-(4-tert-butylphenyl)-carbonat, 4-n-Pentylphenyl-phenyl-carbonat, Di-(4-n-pentylphenyl)-carbonat, 4-n-Hexylphenyl-phenyl-carbonat, Di-(4-n-hexylphenyl)-carbonat, 4-iso-Octylphenyl-phenyl-carbonat, Di-(4-iso-octylphenyl)-carbonat,4-n-Nonylphenyl-phenyl-carbonat, Di-(4-n-nonylphenyl)-carbonat, 4-Cyclohexylphenyl-phenyl-carbonat, Di-(4-cyclohexylphenyl)-carbonat, 4-(1-Methyl-1-phenylethyl)-phenyl-phenyl-carbonat, Di-[4-(1-methyl-1-phenylethyl)-phenyl]-carbonat, Biphenyl-4-yl-phenyl-carbonat, Di-(biphenyl-4-yl)-carbonat, 4-(1-Naphthyl)-phenyl-phenyl-carbonat, 4-(2-Naphthyl)-phenyl-phenyl-carbonat, Di-[4-(1-naphthyl)-phenyl]-carbonat, Di-[4-(2-naphthyl)phenyl]-carbonat, 4-Phenoxyphenyl-phenyl-carbonat, Di-(4-phenoxyphenyl)-carbonat, 3-Pentadecylphenyl-phenyl-carbonat, Di-(3-pentadecylphenyl)-carbonat, 4-Tritylphenyl-phenyl-carbonat, Di-(4-tritylphenyl)-carbonat, Methylsalicylat-phenyl-carbonat, Di-(methylsalicylat)-carbonat, Ethylsalicylat-phenyl-carbonat, Di-(ethylsalicylat)-carbonat, n-Propylsalicylat-phenyl-carbonat, Di-(n-propylsalicylat)-carbonat, iso-Propylsalicylat-phenyl-carbonat, Di-(iso-propylsalicylat)-carbonat, n-Butylsalicylat-phenyl-carbonat, Di-(n-butylsalicylat)-carbonat, iso-Butylsalicylat-phenyl-carbonat, Di-(iso-butylsalicylat)-carbonat, tert-Butylsalicylat-phenyl-carbonat, Di-(tert-butylsalicylat)-carbonat, Di-(phenylsalicylat)-carbonat und Di-(benzylsalicylat)-carbonat.

Bevorzugte Diarylverbindungen sind: Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1-Methyl-1-phenylethyl)-phenyl-phenyl-carbonat und Di-[4-(1-methyl-1-phenylethyl)-phenyl]-carbonat.

Besonders bevorzugt ist: Diphenylcarbonat.

Die Diarylcarbonate können auch mit Restgehalten der Monohydroxyarylverbindungen, aus denen sie hergestellt wurden, eingesetzt werden. Die Restgehalte der Monohydroxyarylverbindungen können bis zu 20 %, vorzugsweise 10 %, besonders bevorzugt bis 5 % und ganz besonders bevorzugt bis zu 2 % betragen.

Bezogen auf die Dihydroxyarylverbindung werden die Diarylcarbonate im Allgemeinen mit 1,02 bis 1,30 Mol, bevorzugt mit 1,04 bis 1,25 Mol, besonders bevorzugt mit 1,06 bis 1,22 Mol, ganz besonders bevorzugt mit 1,06 bis 1,20 Mol pro Mol Dihydroxyarylverbindung eingesetzt. Es können auch Mischungen der oben genannten Diarylcarbonate eingesetzt werden.

Zur Steuerung bzw. Veränderung der Endgruppen kann zusätzlich eine Monohydroxyarylverbindung eingesetzt werden, die nicht zur Herstellung des verwendeten Diarylcarbonats benutzt wurde. Sie wird durch folgende allgemeine Formel (XIV) dargestellt: 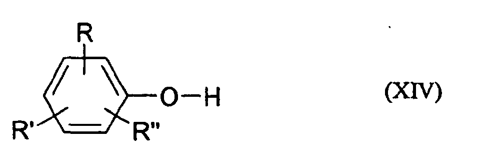 wobei R, R' und R" die bei Formel (XIII) genannte Bedeutung haben mit der Maßgabe, dass in diesem Fall R nicht H sein kann, wohl aber R' und R" H sein können.

Solche Monohydroxyarylverbindungen sind beispielsweise: 1-, 2- oder 3-Methylphenol, 2,4-Dimethylphenol 4-Ethylphenol, 4-n-Propylphenol, 4-iso-Propylphenol, 4-n-Butylphenol, 4-isoButylphenol, 4-tert-Butylphenol, 4-n-Pentylphenol, 4-n-Hexylphenol, 4-iso-Octylphenol, 4-n-Nonylphenol, 3-Pentadecylphenol, 4-Cyclohexylphenol, 4-(1-Methyl-1-phenylethyl)-phenol, 4-Phenylphenol, 4-Phenoxyphenol, 4-(1-Naphthyl)-phenol, 4-(2-Naphthyl)-phenol, 4-Tritylphenol, Methylsalicylat, Ethylsalicylat, n-Propylsalicylat, iso-Propylsalicylat, n-Butylsalicylat, iso-Butylsalicylat, tert-Butylsalicylat, Phenylsalicylat und Benzylsalicylat.

Bevorzugt sind: 4-tert-Butylphenol, 4-iso-Octylphenol und 3-Pentadecylphenol.

Dabei ist eine Monohydroxyarylverbindung zu wählen, deren Siedepunkt über dem der Monohydroxyarylverbindung liegt, die zur Herstellung des verwendeten Diarylcarbonates eingesetzt wurde. Die Monohydroxyarylverbindung kann zu jedem Zeitpunkt im Reaktionsverlauf zugegeben werden. Sie wird bevorzugt zu Beginn der Reaktion zugegeben oder aber auch an beliebiger Stelle im Verfahrensverlauf. Der Anteil an freier Monohydroxyarylverbindung kann 0,2 - 20 Mol %, bevorzugt 0,4 - 10 Mol %, bezogen auf die Dihydroxyarylverbindung, betragen.

Die Endgruppen können auch durch Mitverwendung eines Diarylcarbonates, dessen Basis-Monohydroxyarylverbindung einen höheren Siedepunkt hat als die Basis- Monohydroxyarylverbindung des hauptsächlich eingesetzten Diarylcarbonates, verändert werden. Auch hier kann das Diarylcarbonat zu jedem Zeitpunkt im Reaktionsverlauf zugegeben werden. Es wird bevorzugt zu Beginn der Reaktion zugegeben oder aber auch an beliebiger Stelle im Verfahrensverlauf. Der Anteil des Diarylcarbonates mit der höher siedenden Basis-Monohydroxyarylverbindung an der gesamt eingesetzten Diarylcarbonatmenge kann 1 - 40 Mol %, bevorzugt 1 - 20 Mol % und besonders bevorzugt 1 -10 Mol % betragen.

Als Katalysatoren werden im Schmelzumesterungsverfahren zur Herstellung von Polycarbonaten die in der Literatur bekannten basischen Katalysatoren wie beispielsweise Alkali- und Erdalkalihydroxyde und -oxyde, aber auch Ammonium- oder Phosphoniumsalze, im folgenden als Oniumsalze bezeichnet, eingesetzt. Bevorzugt werden bei der Synthese Oniumsalze, besonders bevorzugt Phosphoniumsalze eingesetzt. Phosphoniumsalze im Sinne der Erfindung sind solche der allgemeinen Formel (XV) 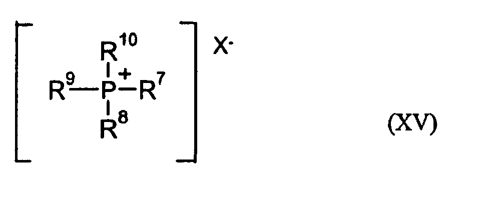 wobei R⁷⁻¹⁰ dieselben oder verschiedene C₁-C₁₀-Alkyle, C₆-C₁₄-Aryle, C₇-C₁₅-Arylalkyle oder C₅-C₆-Cycloalkyle, bevorzugt Methyl oder C₆-C₁₄-Aryle, besonders bevorzugt Methyl oder Phenyl sein können, und X- ein Anion wie Hydroxyd, Sulfat, Hydrogensulfat, Hydrogencarbonat, Carbonat oder ein Halogenid, bevorzugt Chlorid oder ein Alkylat bzw. Arylat der Formel -OR sein kann, wobei R einC₆-C₁₄-Aryl, C₇-C₁₅-Arylalkyl oder C₅-C₆-Cycloalkyl, bevorzugt Phenyl sein kann.

Bevorzugte Katalysatoren sind Tetraphenylphosphoniumchlorid, Tetraphenylphosphoniumhydroxid und Tetraphenylphosphoniumphenolat, besonders bevorzugt ist Tetraphenylphosphoniumphenolat.

Sie werden bevorzugt in Mengen von 10⁻⁸ bis 10⁻³ mol, bezogen auf ein mol Dihydroxyarylverbindung, besonders bevorzugt in Mengen von 10⁻⁷ bis 10⁻⁴ mol, eingesetzt.

Weitere Katalysatoren können allein oder zusätzlich zu dem Oniumsalz als Cokatalysator verwendet werden, um die Geschwindigkeit der Polykondensation zu erhöhen.

Dazu gehören die alkalisch wirkenden Salze von Alkalimetallen und Erdalkalimetallen, wie Hydroxyde, Alkoxyde und Aryloxyde von Lithium, Natrium und Kalium, vorzugsweise Hydroxyde, Alkoxyde oder Aryloxyde von Natrium. Am meisten bevorzugt sind Natriumhydroxyd und Natriumphenolat, sowie auch das Dinatriumsalz des 2,2-Bis-(4-hydroxyphenyl)-propans.

Die Mengen der alkalisch wirkenden Salze von Alkalimetallen und Erdalkalimetallen allein oder als Cokatalysator können im Bereich von 1 bis 500 ppb, vorzugsweise 5 bis 300 ppb und am meisten bevorzugt 5 bis 200 ppb liegen, jeweils berechnet als Natrium und bezogen auf zu bildendes Polycarbonat.

Die alkalisch wirkenden Salze von Alkalimetallen und Erdalkalimetallen können schon bei der Herstellung der Oligocarbonate, das heißt zu Beginn der Synthese, eingesetzt oder aber auch erst vor der Polykondensation zugemischt werden, um unerwünschte Nebenreaktionen zu unterdrücken.

Weiter besteht auch die Möglichkeit, ergänzende Mengen Oniumkatalysatoren des gleichen Typs oder eines anderen vor der Polykondensation zuzugeben.

Die Zugabe der Katalysatoren erfolgt in Lösung, um bei der Dosierung schädliche Überkonzentrationen zu vermeiden. Die Lösungsmittel sind system- und verfahrensinhärente Verbindungen wie beispielsweise Dihydroxyarylverbindungen, Diarylcarbonate oder Monohydroxyarylverbindungen. Besonders bevorzugt sind Monohydroxyarylverbindungen, weil dem Fachmann geläufig ist, dass sich die Dihydroxyarylverbindungen und Diarylcarbonate bei schon leicht erhöhten Temperaturen, insbesondere unter Katalysatoreinwirkung, leicht verändern und zersetzen. Hierunter leiden die Polycarbonatqualitäten. Beim technisch bedeutsamen Umesterungsverfahren zur Herstellung von Polycarbonat ist die bevorzugte Verbindung Phenol. Phenol bietet sich auch deshalb schon zwingend an, weil der vorzugsweise benutzte Katalysator Tetraphenylphosphoniumphenolat bei der Herstellung als Mischkriställ mit Phenol isoliert wird.

Die thermoplastischen Polycarbonate sind durch die Formel (XVI) 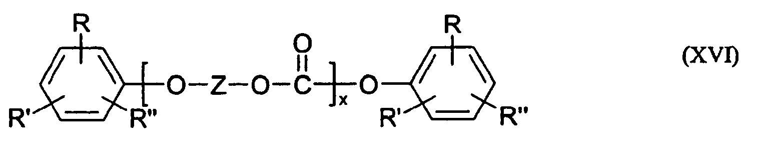 beschrieben, wobei
- R, R' und R" und Z: die bei Formel (IX) bzw. (VIII) genannte Bedeutung haben,
- x: ist eine wiederholende Struktureinheit und ist durch das Molekulargewicht des Polycarbonats charakterisiert.
Der Rest 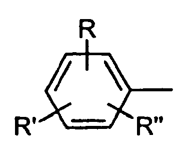 kann in Formel (XVI) als ganze Gruppe auch H und auf beiden Seiten verschieden sein.

Die erhaltenen mittleren Gewichtsmolekulargewichte der Polycarbonate betragen im Allgemeinen 15.000 bis 40.000, bevorzugt 17.000 bis 36.000, besonders bevorzugt 17.000 bis 34.000, wobei das mittlere Gewichtsmolekulargewicht über die relative Viskosität nach der Mark-Houwing Korrelation (J. M. G. Cowie, Chemie und Physik der synthetischen Polymeren, Vieweg Lehrbuch, Braunschweig/Wiesbaden, 1997, Seite 235) bestimmt wurde.

Die Polycarbonate haben einen äußerst geringen Gehalt von Kationen und Anionen von jeweils weniger als 60 ppb, bevorzugt < 40 ppb und besonders bevorzugt < 20 ppb (als Na-Kation berechnet), wobei als Kationen solche von Alkali- und Erdalkalimetallen vorliegen, welche beispielsweise als Verunreinigung aus den verwendeten Rohstoffen und den Phosphonium- und Ammoniumsalzen stammen können. Weitere Ionen wie Fe-, Ni-, Cr-, Zn-, Sn, Mo-, Al-Ionen und ihre Homologen können in den Rohstoffen enthalten sein oder durch Abtrag oder Korrosion aus den Werkstoffen der benutzten Anlage stammen. Der Gehalt dieser Ionen ist in der Summe kleiner als 2 ppm, bevorzugt kleiner als 1 ppm und besonders bevorzugt kleiner 0,5 ppm.

Als Anionen liegen solche von anorganischen Säuren und von organischen Säuren in äquivalenten Mengen vor (z. B. Chlorid, Sulfat, Carbonat, Phosphat, Phosphit, Oxalat, u.a.).

Angestrebt werden also geringste Mengen, die nur durch Verwendung reinster Rohstoffe erreicht werden können. Derart reine Rohstoffe sind z.B. nur nach Reinigungsverfahren wie Umkristallisieren, Destillieren, Umfällen mit Wäschen u. ä. erhältlich.

Die Polycarbonate können gezielt verzweigt werden. Geeignete Verzweiger sind die für die Polycarbonatherstellung bekannten Verbindungen mit drei und mehr funktionellen Gruppen, vorzugsweise solche mit drei oder mehr Hydroxylgruppen.

Einige der verwendbaren Verbindungen mit drei oder mehr phenolischen Hydroxylgruppen sind beispielsweise: Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl]-propan, 2,4-Bis-(4-hydroxyphenyl-isopropyl)-phenol und Tetra-(4-hydroxyphenyl)-methan.

Einige der sonstigen trifunktionellen Verbindungen sind: 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind: 3,3-Bis-(3-methyl-4-hydroxyphenyl)-2-oxo-2,3-dihydroindol und 1,1,1-Tri-(4-hydroxyphenyl)-ethan.

Die Verzweiger werden in Mengen im Allgemeinen von 0,02 bis 3,6 Mol %, bezogen auf die Dihydroxyarylverbindung, eingesetzt.

Das Verfahren zur Herstellung von Polycarbonat nach dem Umesterungsverfahren kann diskontinuierlich oder auch kontinuierlich gestaltet werden. Nachdem die Dihydroxyarylverbindungen und Diarylcarbonate, ggf. mit weiteren Verbindungen, als Schmelze vorliegen, wird in Gegenwart geeigneter Katalysatoren die Umsetzung gestartet. Der Umsatz bzw. das Molekulargewicht wird bei steigenden Temperaturen und fallenden Drucken in geeigneten Apparaten und Vorrichtungen durch Abführen der sich abspaltenden Monohydroxyarylverbindung solange erhöht, bis der angestrebte Endzustand erreicht ist. Durch Wahl des Verhältnisses Dihydroxyarylverbindung zu Diarylcarbonat, der durch Wahl der Verfahrensweise bzw. Anlage zur Herstellung des Polycarbonats gegebenen Verlustrate des Diarylcarbonats über die Brüden und ggf. zugesetzter Verbindungen, wie beispielsweise einer höhersiedenden Monohydroxyarylverbindung, werden die Endgruppen in Art und Konzentration geprägt.

Bezüglich der Art und Weise, in welcher Anlage und nach welcher Verfahrensweise der Prozess ausgeführt wird, gibt es keine Limitierung und Einschränkung.

Weiter gibt es keine spezielle Limitierung und Einschränkung bezüglich der Temperaturen, der Drucke und verwendeter Katalysatoren, um die Schmelzeumesterungsreaktion zwischen der Dihydroxyarylverbindung und dem Diarylcarbonat, ggf. auch anderer zugesetzter Reaktanten durchzuführen. Jede Bedingung ist möglich, solange die gewählten Temperaturen, Drucke und Katalysatoren eine Schmelzeumesterung unter entsprechend schneller Entfernung der abgespaltenen Monohydroxyarylverbindung ermöglichen.

Die Temperaturen über den gesamten Prozess liegen im Allgemeinen zwischen 180 und 330°C, die Drucke zwischen 15 bar, absolut und 0,01 mbar, absolut.

Meist wird eine kontinuierliche Verfahrensweise gewählt, weil das vorteilhaft für die Produktqualität ist.

Vorzugsweise ist das kontinuierliche Verfahren zur Herstellung von Polycarbonaten dadurch gekennzeichnet, dass eine oder mehrere Dihydroxyarylverbindungen mit dem Diarylcarbonat, ggf. auch anderer zugesetzter Reaktanten unter Verwendung von Katalysatoren, nach einer Vorkondensation ohne Abtrennen der gebildeten Monohydroxyarylverbindung in sich dann daran anschließenden mehreren Reaktions-Verdampfer-Stufen bei schrittweise steigenden Temperaturen und schrittweise fallenden Drucken das Molekulargewicht bis zum gewünschten Niveau aufgebaut wird.

Die für die einzelnen Reaktions-Verdampfer-Stufen geeigneten Vorrichtungen, Apparate und Reaktoren sind entsprechend dem Verfahrensverlauf Wärmetauscher, Entspannungsapparate, Abscheider, Kolonnen, Verdampfer, Rührbehälter und Reaktoren oder sonstige käufliche Apparate, welche die nötige Verweilzeit bei ausgewählten Temperaturen und Drucken bereitstellen. Die gewählten Vorrichtungen müssen den nötigen Wärmeeintrag ermöglichen und so konstruiert sein, dass sie den kontinuierlich wachsenden Schmelzviskositäten gerecht werden.

Alle Vorrichtungen sind über Pumpen, Rohrleitungen und Ventilen miteinander verbunden. Die Rohrleitungen zwischen allen Einrichtungen sollten selbstverständlich so kurz wie möglich sein und die Krümmungen der Leitungen so gering wie möglich gehalten werden, um unnötig verlängerte Verweilzeiten zu vermeiden. Dabei sind die äußeren, das heißt technischen Rahmenbedingungen und Belange für Montagen chemischer Anlagen zu berücksichtigen.

Zur Durchführung des Verfahrens nach einer bevorzugten kontinuierlichen Verfahrensweise können die Reaktionspartner entweder gemeinsam aufgeschmolzen oder aber die feste Dihydroxyarylverbindung in der Diarylcarbonatschmelze oder das feste Diarylcarbonat in der Schmelze der Dihydroxyarylverbindung gelöst werden oder beide Rohstoffe werden als Schmelze, bevorzugt direkt aus der Herstellung, zusammengeführt. Die Verweilzeiten der getrennten Schmelzen der Rohstoffe, insbesondere die der Schmelze der Dihydroxyarylverbindung, werden so kurz wie möglich eingestellt. Das Schmelzegemisch kann dagegen wegen des im Vergleich zu den einzelnen Rohstoffen erniedrigten Schmelzpunktes des Rohstoffgemisches bei entsprechend niedrigeren Temperaturen ohne Qualitätseinbußen länger verweilen.

Danach wird der Katalysator, vorzugsweise in Phenol gelöst, zugemischt und die Schmelze auf die Reaktionstemperatur erhitzt. Diese beträgt zu Beginn des technisch bedeutsamen Prozesses zur Herstellung von Polycarbonat aus 2,2-Bis-(4-hydroxyphenyl)-propan und Diphenylcarbonat 180 bis 220°C, vorzugsweise 190 bis 210°C, ganz besonders bevorzugt 190°C. Bei Verweilzeiten von 15 bis 90 min, vorzugsweise 30 bis 60 min, wird das Reaktionsgleichgewicht eingestellt, ohne dass die gebildete Hydroxyarylverbindung entnommen wird. Die Reaktion kann bei Atmosphärendruck, aber aus technischen Gründen auch bei Überdruck gefahren werden. Der bevorzugte Druck in technischen Anlagen beträgt 2 bis 15 bar absolut.

Das Schmelzegemisch wird in eine erste Vakuumkammer, deren Druck auf 100 bis 400 mbar, vorzugsweise auf 150 bis 300 mbar eingestellt wird, entspannt und direkt danach in einer geeigneten Vorrichtung bei gleichem Druck wieder auf die Eintrittstemperatur erhitzt. Bei dem Entspannungsvorgang wird die entstandene Hydroxyarylverbindung mit noch vorhandenen Monomeren verdampft. Nach einer Verweilzeit von 5 bis 30 min in einer Sumpfvorlage ggf. mit Umpumpung bei gleichem Druck und gleicher Temperatur wird das Reaktionsgemisch in eine zweite Vakuumkammer, deren Druck 50 bis 200 mbar, vorzugsweise 80 bis 150 mbar beträgt, entspannt und direkt danach in einer geeigneten Vorrichtung bei gleichem Druck auf eine Temperatur von 190 bis 250°C, bevorzugt 210 bis 240°C, besonders bevorzugt 210 bis 230°C, erwärmt. Auch hierbei wird die entstandene Hydroxyarylverbindung mit noch vorhandenen Monomeren verdampft. Nach einer Verweilzeit von 5 bis 30 min in einer Sumpfvorlage, ggf. mit Umpumpung, bei gleichem Druck und gleicher Temperatur wird das Reaktionsgemisch in eine dritte Vakuumkammer, deren Druck 30 bis 150 mbar, vorzugsweise 50 bis 120 mbar beträgt, entspannt und direkt danach in einer geeigneten Vorrichtung bei gleichem Druck auf eine Temperatur von 220 bis 280°C, bevorzugt 240 bis 270°C, besonders bevorzugt 240 bis 260°C, erwärmt. Auch hierbei wird die entstandene Hydroxyarylverbindung mit noch vorhandenen Monomeren verdampft. Nach einer Verweilzeit von 5 bis 20 min in einer Sumpfvorlage ggf. mit Umpumpung bei gleichem Druck und gleicher Temperatur wird das Reaktionsgemisch in eine weitere Vakuumkammer, deren Druck bei 5 bis 100 mbar, bevorzugt 15 bis 100 mbar, besonders bevorzugt 20 bis 80 mbar beträgt, entspannt und direkt danach in einer geeigneten Vorrichtung bei gleichem Druck auf eine Temperatur von 250 bis 300°C, vorzugsweise 260 bis 290°C, besonders bevorzugt 260 bis 280°C, erwärmt. Auch hierbei wird die entstandene Hydroxyarylverbindung mit noch vorhandenen Monomeren verdampft.

Die Zahl dieser Stufen, hier beispielhaft 4, kann zwischen 2 und 6 variieren. Die Temperaturen und Drucke sind bei Änderung der Stufigkeit entsprechend anzupassen, um vergleichbare Resultate zu erhalten. Die in diesen Stufen erreichte rel. Viskosität des oligomeren Carbonats liegt zwischen 1,04 und 1,20, bevorzugt zwischen 1,05 und 1,15, besonders bevorzugt zwischen 1,06 bis 1,10.

Das so erzeugte Oligocarbonat wird nach einer Verweilzeit von 5 bis 20 min in einer Sumpfvorlage ggf. mit Umpumpung bei gleichem Druck und gleicher Temperatur wie in der letzten Flash-/Verdampferstufe in einen Scheiben- oder Korbreaktor gefördert und bei 250 bis 310°C, bevorzugt 250 bis 290°C, besonders bevorzugt 250 bis 280°C, bei Drucken von 1 bis 15 mbar, vorzugsweise 2 bis 10 mbar, bei Verweilzeiten von 30 bis 90 min, vorzugsweise 30 bis 60 min, weiter aufkondensiert. Das Produkt erreicht eine rel. Viskosität von 1,12 bis 1,28, bevorzugt 1,13 bis 1,26, besonders bevorzugt 1,13 bis 1,24.

Die diesen Reaktor verlassende Schmelze wird in einem weiteren Scheiben- oder Korbreaktor auf die gewünschte Endviskosität bzw. das Endmolekulargewicht gebracht. Die Temperaturen betragen 270 bis 330°C, bevorzugt 280 bis 320°C, besonders bevorzugt 280 bis 310°C, der Druck 0,01 bis 3 mbar, vorzugsweise 0,2 bis 2 mbar, bei Verweilzeiten von 60 bis 180 min, vorzugsweise 75 bis 150 min. Die rel. Viskositäten werden auf das für die vorgesehene Anwendung nötige Niveau eingestellt und betragen 1,18 bis 1,40, bevorzugt 1,18 bis 1,36, besonders bevorzugt 1,18 bis 1,34.

Die Funktion der beiden Korbreaktoren kann auch in einem Korbreaktor zusammengefasst werden.

Die Brüden aus allen Verfahrensstufen werden unmittelbar abgeleitet, gesammelt und aufgearbeitet. Diese Aufarbeitung erfolgt in der Regel destillativ, um hohe Reinheiten der rückgewonnenen Stoffe zu erreichen. Dies kann beispielsweise gemäss Deutscher Patentanmeldung Nr. 10 100 404 erfolgen. Eine Rückgewinnung und Isolierung der abgespaltenen Monohydroxyarylverbindung in reinster Form ist aus ökonomischer und ökologischer Sicht selbstverständlich. Die Monohydroxyarylverbindung kann direkt zur Herstellung einer Dihydroxyarylverbindung oder eines Diarylcarbonats verwendet werden.

Die Scheiben- oder Korbreaktoren zeichnen sich dadurch aus, dass sie bei hohen Verweilzeiten eine sehr große, sich ständig erneuernde Oberfläche am Vakuum bereitstellen. Die Scheiben- oder Korbreaktoren sind entsprechend den Schmelzviskositäten der Produkte geometrisch ausgebildet. Geeignet sind beispielsweise Reaktoren, wie sie in der DE 44 47 422 C2 und EP A 1 253 163, oder Zweiwellenreaktoren, wie sie in der WO A 99/28 370 beschrieben sind.

Die Oligocarbonate, auch sehr niedermolekulare, und die fertigen Polycarbonate werden in der Regel mittels Zahnradpumpen, Schnecken unterschiedlichster Bauart oder Verdrängerpumpen spezieller Bauart gefördert.

Besonders geeignete Werkstoffe zur Herstellung der Apparate, Reaktoren, Rohrleitungen, Pumpen und Armaturen sind nicht rostende Stähle vom Typ Cr Ni (Mo) 18/10 wie z. B. 1.4571 oder 1. 4541 (Stahlschlüssel 2001, Verlag: Stahlschlüssel Wegst GmbH, Th-Heuss-Straße 36, D-71672 Marbach) und Ni-Basislegierungen vom Typ C, wie z. B. 2.4605 oder 2.4610 (Stahlschlüssel 2001, Verlag: Stahlschlüssel Wegst GmbH, Th-Heuss-Straße 36, D-71672 Marbach). Die nicht rostenden Stähle werden bis zu Prozesstemperaturen von etwa 290°C und die Ni-Basislegierungen bei Prozesstemperaturen oberhalb von etwa 290°C benutzt.

### Verunreinigungen:

Polycarbonate, die über die Schmelzeumesterung hergestellt werden können nach der Herstellung katalytisch aktive, basische Verunreinigungen enthalten. Diese sind zum einen durch nicht abgetrennte geringfügige Verunreinigungen der Ausgangssubstanzen, durch nicht abgetrennte basische Reste von thermisch zersetzbaren Katalysatoren oder durch nicht abgetrennte stabile basische Katalysatorsalze zu begründen. Unter thermisch zersetzbaren Katalysatoren sind zum Beispiel die oben beschriebenen Oniumsalze zu verstehen. Unter thermisch stabilen Katalysatoren sind beispielsweise alkalisch wirkende Salze der Alkali- bzw. Erdalkalimetalle zu verstehen.

Zur Inhibierung der katalytisch aktiven, basischen Verunreinigungen können den Polycarbonaten zu verschiedenen Zeitpunkten in den jeweiligen Verfahren die erfindungsgemäßen, oben beschriebenen Inhibitoren zugesetzt werden. Bezüglich des Zugabezeitpunkts besteht keine Limitierung. Unter Inhibitoren werden im allgemeinen alle Verbindungen verstanden, die die Kinetik von chemischen Reaktionen entscheidend hemmen, so dass qualitätsmindernde Veränderungen im Polymeren vermieden werden.

### Inhibitoren

Bevorzugt werden die erfindungsgemäßen Inhibitoren gemäß den Formeln (I) bis (XI) nach Erreichen des gewünschten Molekulargewichts des Polycarbonats zugegeben. Zur wirksamen Einmischung des Inhibitors sind statische Mischer oder andere zu einer homogenen Einmischung führende Mischer, wie beispielsweise Extruder, geeignet. In letzterem Falle wird der Thermostabilisator über einen Seitenextruder der Polymerschmelze, evtl. zusammen mit anderen Stoffen, wie z.B. Entformungsmittel dem Polymerhauptstrom zugegeben.

Die erfindungsgemäßen Inhibitoren können einzeln oder in beliebigen Mischungen untereinander oder mehreren verschiedenen Mischungen der Polymerschmelze zugesetzt werden. Ausserdem können auch Mischungen der erfindungsgemäßen Inhibitoren mit freien Sulfonsäurederivaten, wie z.B. Benzol- oder Toluolsulfonsäure zugegeben werden.

Die Inhibitoren haben bevorzugt Schmelzpunkte größer als 30°C, bevorzugt größer 40°C und besonders bevorzugt größer 50°C und Siedepunkte bei 1 mbar größer 150°C, bevorzugt größer 200°C und besonders bevorzugt größer 230°C.

Die erfindungsgemäßen Inhibitoren können in Mengen von kleiner 100 ppm bezogen auf das Polycarbonat eingesetzt werden, bevorzugt kleiner 50 ppm bezogen auf das Polycarbonat, besonders bevorzugt kleiner 30 ppm und ganz besonders bevorzugt kleiner 15 ppm.

Bevorzugt werden mindestens 0,5 ppm, besonders bevorzugt 1 ppm, ganz besonders bevorzugt 1,5 ppm Inhibitor oder Mischungen davon eingesetzt. Insbesondere werden die Inhibitoren bezogen auf das Polycarbonat in Mengen von 2 bis 10 ppm eingesetzt.

Wahlweise können sie auch in Mischungen mit freien Säuren, wie beispielsweise ortho-Phosphorsäure oder anderen als Stabilisatoren geeigneten Additive, wie z.B. Benzol- oder Toluolsulfonsäuren zugesetzt werden. Die Menge an freien Säuren bzw. anderen Inhibitoren beträgt (bezogen auf Polycarbonat) bis zu 20 ppm, vorzugsweise bis zu 10 ppm, insbesondere 0 bis 5 ppm.

Bezüglich der Zugabeform der erfindungsgemäßen Inhibitoren gibt es keine Limitierung. Die erfindungsgemäßen Ester von organischen Schwefel-enthaltenden Säuren beziehungsweise deren Mischungen können als Feststoff, also als Pulver, in Lösung oder als Schmelze der Polymerschmelze zugesetzt werden. Eine andere Art der Dosierung ist die Verwendung eines Masterbatches (vorzugsweise mit Polycarbonat), das auch weitere Additive, wie beispielsweise andere Stabilisatoren oder Entformungsmittel enthalten kann.

Bevorzugt werden die erfindungsgemäßen Ester von organischen Schwefel-enthaltenden Säuren in flüssiger Form zugegeben. Da die zu dosierenden Mengen sehr gering sind, werden vorzugsweise Lösungen der erfindungsgemäßen verbrückten Ester verwendet.

Geeignete Lösemittel sind solche, die den Prozess nicht stören, chemisch inert sind und schnell verdampfen.

Als Lösemittel kommen alle organischen Lösemittel mit einem Siedepunkt bei Normaldruck von 30 bis 300°C, bevorzugt von 30 bis 250°C und besonders bevorzugt von 30 bis 200°C sowie auch Wasser - dazu zählt auch Kristallwasser - in Frage. Vorzugsweise werden solche Verbindungen gewählt, die in den jeweiligen Prozessen vorkommen. Eventuell verbleibende Reste mindern, je nach Anforderungsprofil des herzustellenden Produktes, nicht die Qualität.

Lösemittel sind neben Wasser Alkane, Cycloalkane und Aromaten, die auch substituiert sein können. Die Substituenten können aliphatische, cycloaliphatische oder aromatische Reste in unterschiedlicher Kombination sowie Halogene oder eine Hydroxylpruppe sein. Heteroatome, wie beispielsweise Sauerstoff, können auch zwischen aliphatischen, cycloaliphatischen oder aromatischen Resten Brückenglieder sein, wobei die Reste gleich oder unterschiedlich sein können. Weitere Lösemittel können auch Ketone und Ester organischer Säuren sowie cyclische Carbonate sein. Weiterhin kann der Inhibitor auch in Glycerinmonostearat gelöst und zudosiert werden.

Beispiele sind neben Wasser n-Pentan, n- Hexan, n-Heptan und deren Isomere, Chlorbenzol, Methanol, Ethanol, Propanol, Butanol und deren Isomere, Phenol, o-, m- und p-Kresol, Aceton, Diethylether, Dimethylketon, Polyethylenglycole, Polypropylenglycole, Essigsäureethylester, Ethylencarbonat und Propylencarbonat.

Bevorzugt geeignet sind für den Polycarbonatprozess Wasser, Phenol, Propylencarbonat, Ethylencarbonat und Toluol.

Besonders bevorzugt geeignet sind Wasser, Phenol und Propylencarbonat.

Als Abbauprodukte der erfindungsgemäßen Inhibitoren der Formeln (I) bis (VII) entstehen freie Sulfonsäuren sowie teilweise noch veresterte Sulfonsäuren und auch Alkohole.

Weiterhin kann das erhaltene Polycarbonat zur Veränderung von Eigenschaften mit weiteren, üblichen Additiven und Zusatzstoffen (z.B. Hilfs- und Verstärkungsstoffe) nach Zugabe der erfindungsgemäßen Inhibitoren versehen werden. Der Zusatz von Additiven und Zuschlagsstoffen dient der Verlängerung der Nutzungsdauer (z.B. Hydrolyse- oder Abbaustabilisatoren), der Verbesserung der Farbstabilität (z.B. Thermo- und UV-Stabilisatoren), der Vereinfachung der Verarbeitung (z.B. Entformer, Fließhilfsmittel), der Verbesserung der Gebrauchseigenschaften (z.B. Antistatika), der Verbesserung des Flammschutzes, der Beeinflussung des optischen Eindrucks (z.B. organische Farbmittel, Pigmente) oder der Anpassung der Polymereigenschaften an bestimmte Belastungen (Schlagzähmodifikatoren, fein zerteilte Mineralien, Faserstoffe, Quarzmehl, Glas- und Kohlenstofffasern). Alles kann beliebig kombiniert werden, um die gewünschten Eigenschaften einzustellen und zu erreichen. Solche Zuschlagstoffe und Additive werden z.B. in "Plastics Additives", R. Gächter und H. Müller, Hanser Publishers 1983, beschrieben.

Diese Additive und Zuschlagstoffe können einzeln oder in beliebigen Mischungen oder mehreren verschiedenen Mischungen der Polymerschmelze zugesetzt werden und zwar direkt bei der Isolierung des Polymeren oder aber nach Aufschmelzung von Granulat in einem sogenannten Compoundierungsschritt.

Dabei können die Additive und Zuschlagstoffe beziehungsweise deren Mischungen als Feststoff, also als Pulver, oder als Schmelze der Polymerschmelze zugesetzt werden. Eine andere Art der Dosierung ist die Verwendung von Masterbatches oder Mischungen von Masterbatches der Additive oder Additivmischungen.

Der Zusatz dieser Stoffe erfolgt vorzugsweise auf herkömmlichen Aggregaten zum fertigen Polycarbonat, kann jedoch, je nach den Erfordernissen, auch auf einer anderen Stufe im Herstellverfahren des Polycarbonats erfolgen.

Geeignete Additive sind beispielsweise beschrieben in Additives for Plastics Handbook, John Murphy, Elsevier, Oxford 1999 oder Plastics Additives Handbook Hans Zweifel, Hanser, München 2001.

Die nachfolgenden Beispiele sollen die vorliegende Erfindung illustrieren, ohne sie jedoch einschränken zu wollen:

### Beispiele

Die relative Lösungsviskosität wird in Dichlormethan bei einer Konzentration von 5 g/l bei 25°C bestimmt.

Der Gehalt an phenolischem OH wird durch IR-Messung erhalten. Zu diesem Zweck wird eine Differenzmessung von einer Lösung aus 2 g Polymer in 50 ml Dichlormethan gegenüber reinem Dichlormethan vermessen und die Extinktionsdifferenz bei 3582 cm⁻¹ bestimmt.

Unter GMS wird ein Gemisch aus Glycerinmonopalmitat und Glycerinmonostearat verstanden.

Der GMS-Gesamtgehalt setzt sich zusammen aus dem freien GMS (GMS _{frei}), dem GMS-Carbonat (GMS-CO₃) und dem eingebauten GMS. Letzterer wird durch Differenzbildung errechnet.

Ein Teil der Probe wird bei etwa 80°C alkalisch hydrolysiert und anschließend mit Salzsäure auf etwa pH 1 eingestellt. Diese Lösung wird mit tert-Butylmethylether extrahiert und der Extrakt getrocknet. Nach Derivatisierung erfolgt die gaschromatographische Analyse auf einer Kapillarsäule in Verbindung mit einem Flammenionisationsdetektor. Die quantitative Auswertung erfolgt über einen inneren Standard und ergibt den Gesamtgehalt an GMS.

Ein anderer Teil der Probe wird in Dichlormethan gelöst und derivatisiert. Nach gaschromatographischer Auftrennung auf einer Kapillarsäule und Detektion mittels Flammenionisationsdetektor (FID) erfolgt die Quantifizierung über einen inneren Standard. Es werden die Gehalte an freiem GMS und GMS-Carbonat erhalten.

Quantifizierung von Glycerinmonostearat (GMS) und Glycerinmonostearat-carbonat (GMS-Carbonat) in Polycarbonat per GC-FID:
Ca. 0,5 g Probe werden in 5 ml CH2CI2 gelöst und mit internem Standard (z.B. n-Alkan) versetzt. Zu dieser Lösung werden ca. 5 ml tert.-Butylmethylether (MTBE) gegeben, um das Polymer auszufällen. Die Suspension wird dann geschüttelt und anschließend zentrifugiert. Eine definierte Menge (3 ml) der überstehenden Lösung wird abpipetiert und unter Stickstoff-Atmosphäre bis zur Trockne eingeengt. Der Rückstand wird mit MSTFA-Lösung (N-Methyl-N-(trimethylsilyl)-trifluoroacetamide) silyliert. Die filtrierte Lösung wird per Gaschromatographie (GC) (z.B. HP 6890) chromatographiert. Detektion erfolgt per Flammenionisationsdetektor (FID).

### Analytikvorschrift zur Ermittlung der Restmonomere:

Die Probe wird in Dichlormethan gelöst und in Aceton/Methanol umgefällt. Das ausgefällte Polymer wird abgetrennt und das Filtrat eingeengt. Die Quantifizierung der Restmonomere erfolgt durch Reverse-Phase. Chromatographie im Fließmittelgradienten 0,04 % Phosphorsäure-Acetonitril. Die Detektion erfolgt über UV.

Auf diese Weise werden das Bisphenol (BPA), Phenol, tert. Butylphenol (BUP), Diphenylcarbonat (DPC) und Di-BUP-carbonat bestimmt.

### Einsatzmaterialien:

| | | |
|---|---|---|
| Polycarbonat A: | relative Lösungsviskosität | 1,204 |
| | Gehalt an phenolischem OH | 500 ppm |
| | DPC | 500 ppm |
| | BPA | 20 ppm |
| | Phenol | 100 ppm |

### Inhibitor A:

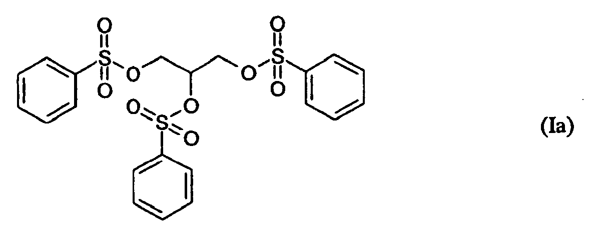

### Inhibitor B:

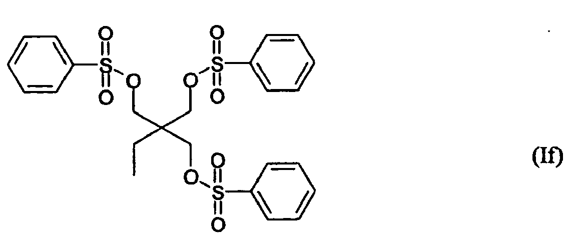

### Inhibitor C:

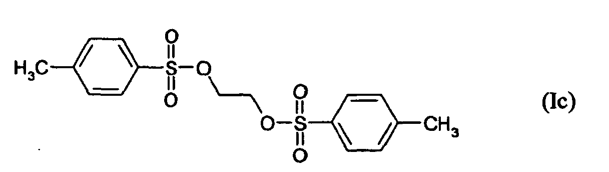

Der Einfluss der erfindungsgemäßen Inhibitoren auf die Verbesserung der thermischen Stabilität eines Polycarbonats wird anhand der langzeitigen thermischen Belastbarkeit des Polycarbonats untersucht.

### Beispiel A

### Synthese von Inhibitor A:

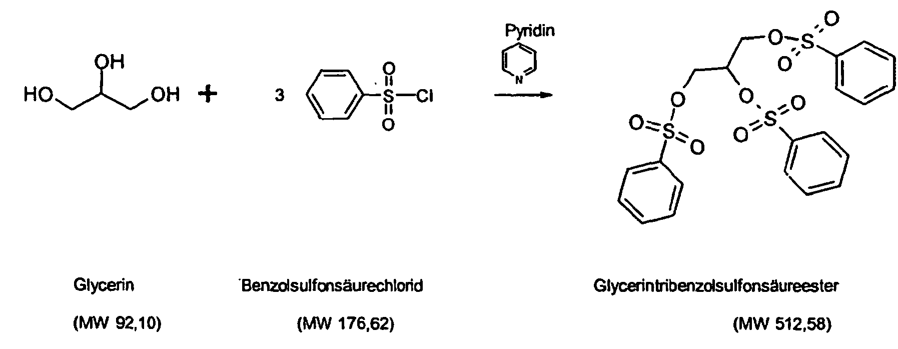

552,6 g (6,0 Mol) Glycerin der Fa. KMF und 4746g (60 Mol) Pyridin der Firma Aldrich werden unter Stickstoff vorgelegt und homogen gelöst. 3196,8 g (18,1Mol) Benzolsulfonsäurechlorid werden sehr langsam zugetropft, wobei eine Temperatur von 30-35°C nicht überschritten werden sollte. Anschließend wird 1 Stunde bei 40°C gerührt.

### Aufarbeitung:

Der Ansatz wird sehr langsam in eine Mischung aus 3 Liter destilliertem Wasser , etwa 4 kg Eis und 3 Liter Dichlormethan unter starkem Rühren abgelassen. Hierbei sollte eine Temperatur von 35°C nicht überschritten werden.

Die organische Phase wird anschließend in ca. 10 Liter Methanol gefällt, abgesaugt und so lange mit Methanol gewaschen bis ein Nachweis in der Dünnschichtchromatographie auf ein sauberes Produkt hinweist.

Anschließend wird bis zur Massenkonstanz im Vakuumtrockenschrank bei 60°C getrocknet.

Ausbeute: 970g (31,54 % der Theorie) weißes Pulver

### Analytik:

- Schmelzpunkt Fp. 81-83°C
- ¹H-NMR (400 MHz, TMS, CDCl₃) δ = 7,8 ppm (m, 6H), 7,7 (m, 3H), 7,55 (m, 6H), 4,75 (m, 1H), 4,1 (d, 4H).

### Beispiel 1:

Das Ausgangspolycarbonat A wird mit 2,5 ppm Inhibitor A bezogen auf die eingesetzte Menge an Polycarbonat versetzt und mit Stickstoff und Vakuum inertisiert. Die Probe wird in ein auf 300°C vorgeheiztes Bad eingetaucht und unter Hochvakuum 20 min. ohne Rühren aufgeschmolzen. Sobald die Probe geschmolzen ist, wird der Rührer angestellt und eine kleine Menge Probe gezogen. Man rührt weitere 2h, wobei zwischenzeitlich nach 30, 60 und 120 min. jeweils kleine Proben gezogen werden.

Von diesen Proben wird die relative Viskosität und der Gehalt an Restmonomeren bestimmt (Tabelle 1).

### Beispiel 2:

Wie Beispiel 1 nur mit 2,5 ppm Inhibitor B.

### Beispiel 3:

Wie Beispiel 1 nur mit 2,5 ppm Inhibitor C.

### Vergleichsbeispiel 1:

Wie Beispiel 1 nur ohne Inhibitor.

### Vergleichsbeispiel 2:

Wie Beispiel 1 nur mit 2,5 ppm Ethyltosylat als Inhibitor.

### Vergleichsbeispiel 3:

Wie Beispiel 1 nur mit 2,5 ppm ortho-Phosphorsäure als Inhibitor.

**Tabelle 1:**

| | **Inhibitor/ ppm** | **- 20 min** | **0 min** | **30 min** | **60 min** | **120 min** | Δ **(120 -20) min** |
|---|---|---|---|---|---|---|---|
| **relative Viskosität * 100 - 100** | | | | | | | |
| Bsp. 1 | 2,5 ppm Inhibitor A | 20,4 | 20,3 | 21,0 | - | 21,0 | **0,6** |
| Bsp. 2 | 2,5 ppm Inhibitor B | 20,4 | 20,9 | 21,9 | - | 22,3 | **1,9** |
| Bsp. 3 | 2,5 ppm Inhibitor C | 20,4 | 20,9 | 21,9 | 22,3 | 22,9 | **2,5** |
| Vgl.Bsp.1 | Ohne | 20,4 | 21,1 | 23,4 | 24,6 | 26,0 | 5,6 |
| Vgl.Bsp.2 | 2,5 ppm Inhibitor Ethyltosylat | 20,4 | 21,2 | 22,0 | - | 23,1 | 2,7 |
| Vgl. Bsp. 3 | 2,5 ppm Inhibitor ortho-Phosphorsäure | 20,4 | 20,7 | 21,7 | 22,6 | 23,7 | 3,3 |
| **DPC/ ppm** | | | | | | | |
| Bsp. 1 | 2,5 ppm Inhibitor A | 488 | 292 | 54 | - | **43** | - |
| Bsp. 2 | 2,5 ppm Inhibitor B | 488 | 173 | 25 | - | 7 | - |
| Bsp. 3 | 2,5 ppm Inhibitor C | 488 | 256 | 88 | - | **50** | - |
| Vgl. Bsp. 1 | Ohne | 488 | 245 | 192 | - | 179 | - |
| Vgl. Bsp. 2 | 2,5 ppm Inhibitor Ethyltosylat | 488 | 252 | 182 | - | 223 | - |
| Vgl. Bsp. 3 | 2,5 ppm Inhibitor ortho-Phosphorsäure | 488 | 153 | 109 | - | 90 | - |

Diese Beispiele zeigen das positive Verhalten der erfindungsgemäßen Inhibitoren gegenüber Versuchen ohne Inhibitor, mit einem unverbrückten Inhibitor und einer relativ leicht flüchtigen Säure bezüglich der Unterdrückung der Kondensationsaktivität des Polycarbonats (geringe Erhöhung der relativen Viskosität unter Vakuum) bei gleichzeitig effizienter Verringerung der Restmonomere, gezeigt am Beispiel Diphenylcarbonat (DPC).

Untersuchungen zur Korrosion der Werkstoffen 1.4571 und 2.4605 in Polycarbonat, welches mit 0,41 Masse % des Inhibitors C versetzt ist, weisen nach Belastung über 600 h bei 300°C keinen Korrosionsbefund vor (Abtragungsrate < 0,01 mm/ a).

Des weiteren wurde der Einfluss der erfindungsgemäßen Inhibitoren zur Unterdrückung der katalytischen Aktivität eines Polycarbonats anhand der Dosierung von Glycerinmonostearat untersucht.

### Beispiel 4:

Ein Polycarbonatschmelzestrom von 4.600 kg/h mit einer relativen Viskosität von 1,200 wird mit GMS zur Verbesserung des Entformungsverhaltens ausgerüstet. Zu diesem Zweck werden in einem Zweiwellen-Extruder mit einem Wellendurchmesser von 70 mm 400 kg Polycarbonatgranulat/h bei 290 °C aufgeschmolzen. Über ein offenes Gehäuse des Extruders, durch den schon Polycarbonatschmelze gefördert wird, werden 46 g/h Inhibitor C (1 ppm bezogen auf den Polycarbonatstrom), gelöst in einem Phenol/Wasser Gemisch (90 :10), dosiert. In den gleichen Extruder werden kurz dahinter über eine Leitung 1560 g flüssiges GMS/h mit 90°C Schmelzetemperatur in ein weiteres offenes Gehäuse dosiert. In beide offene Gehäuse wird etwas Stickstoff zur Inertisierung geleitet. Die aus dem Extruder austretende Schmelze wird von einer Zahnradpumpe übernommen und in den Schmelzehauptstrom, der eine Temperatur von 288°C hat, gepumpt. Direkt nach Zusammentreffen der Schmelzeströme folgt in Flussrichtung ein statischer Mischer, der das Additiv in dem gesamten Schmelzestrom homogen verteilt. Danach wird die Schmelze ausgetragen und granuliert. Im Produkt werden die in Tabelle 2 dargestellten Werte gemessen.

### Vergleichsbeispiel 4:

Wie Beispiel 4 nur ohne Zugabe eines Inhibitors.

**Tabelle 2**

| | GMS _{frei} / ppm | GMS-CO₃/ ppm | GMS_{eingebaut}/ ppm |
|---|---|---|---|
| Bsp. 4 | 242 | 35 | 66 |
| Vgl.Bsp.4 | 81 | 239 | 23 |

Eindeutig ist der positive Einfluss auf die Stabilität des freien Entformers bei Einmischung in die Polymerschmelze durch die Zugabe des erfindungsgemäßen Inhibitors zu sehen.

## Patentansprüche

1. Verfahren zur Herstellung von Polycarbonat, **dadurch gekennzeichnet, dass** Ester von organischen Schwefel-enthaltenden Säuren ausgewählt sind aus mindestens einer Verbindung
a) der Formel (I) 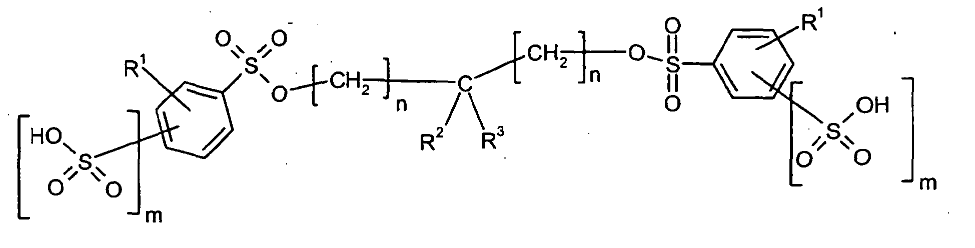 in welcher
R¹ unabhängig für Wasserstoff oder unsubstituiertes oder durch Halogen substituiertes C₁-C₂₀-Alkyl steht,
R² und R³ unabhängig voneinander für Wasserstoff, C₁-C₆-Alkyl oder C₄-C₃₀-Alkylcarboxyl oder für den Rest steht 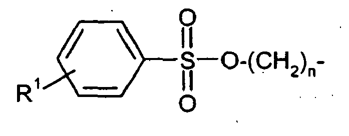 worin
R¹ die oben genannte Bedeutung hat,
m für 0 oder 1 steht,
n für eine ganze Zahl von 0 bis 8 steht,
b) der Formel (IV) 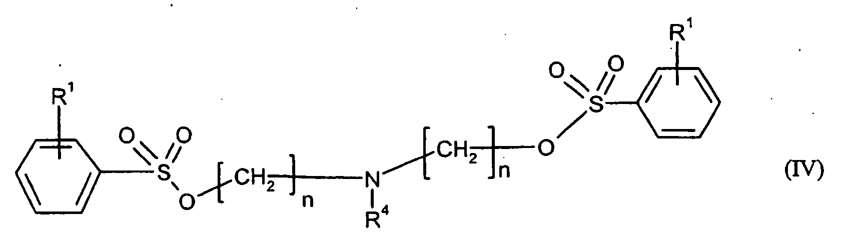 in welcher
R¹ und n die oben genannte Bedeutung haben, und
R⁴ für C₄-C₃₀-Alkylearboxyl, oder
für folgenden Rest 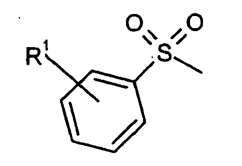 wobei R¹ die oben genannte Bedeutung hat,
steht und
c) der Formel (V), (VI), (VIIa), (VIIb), (Ib), (IVb) 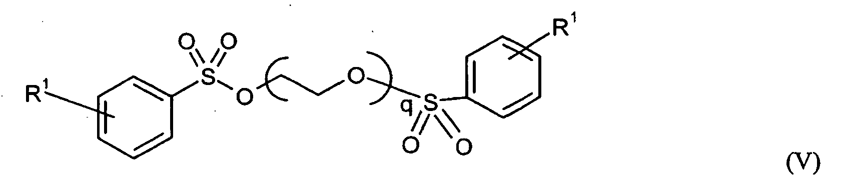 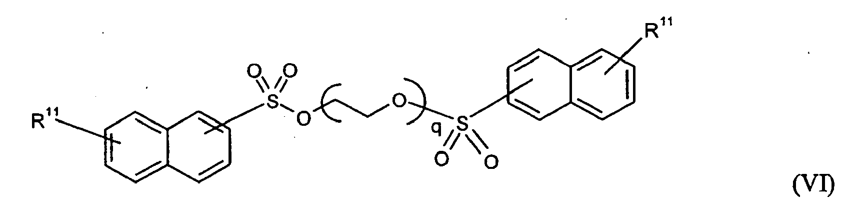 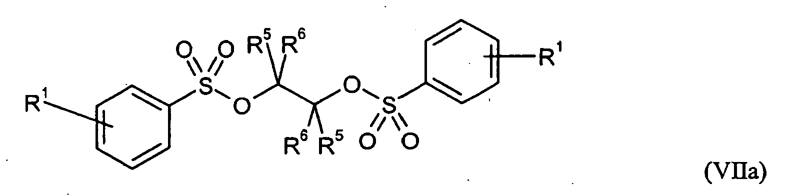 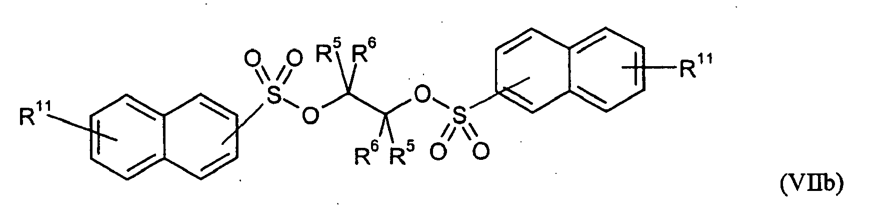 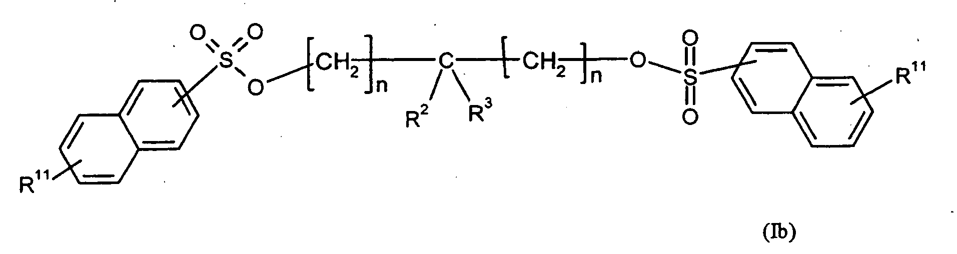 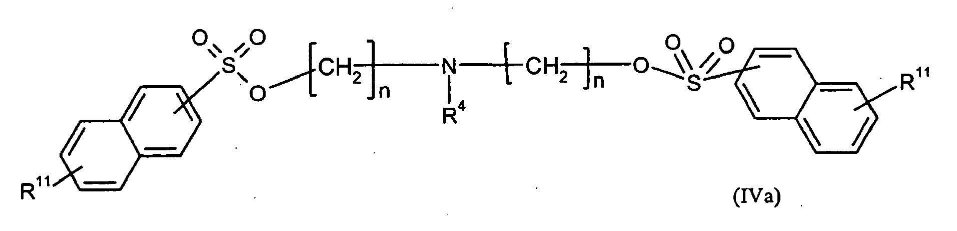
in welcher
R¹ und n die oben genannte Bedeutung haben, und
q für eine ganze Zahl von 0 bis 10 steht,
R⁵ und R⁶ unabhängig für Wasserstoff oder für C₁-C₂₀-Alkyl, wobei Alkyl durch Halogen substituiert sein kann, und
R¹¹ unabhängig für Wasserstoff oder Di-(C₁-C₄)-Alkylamino steht,
zwischen Mittel- und Hochviskosreaktor zugegeben werden.

2. Verfahren gemäß Anspruch 1, wobei Polycarbonat nach dem Schmelzeumesterungsverfahren hergestellt wird.

3. Verfahren gemäß Anspruch 1, wobei die Ester von organischen Schwefel-enthaltenden Säuren in einer positiven Menge von bis zu 100 ppm bezogen auf das Gewicht des Polycarbonats zugegeben worden.

4. Verwendung von Estern von organischen Schwefel-enthaltenden Säuren gemäß Anspruch 1 zur Inhibierung von katalytisch aktiven Verunreinigungen bei der Herstellung von Polycarbonat nach dem Schmelzeumesterungswrfahren.

## Claims

1. Process for the preparation of polycarbonate, **characterised in that** esters of organic sulfur-containing acids selected from at least one compound
a) of formula (I) 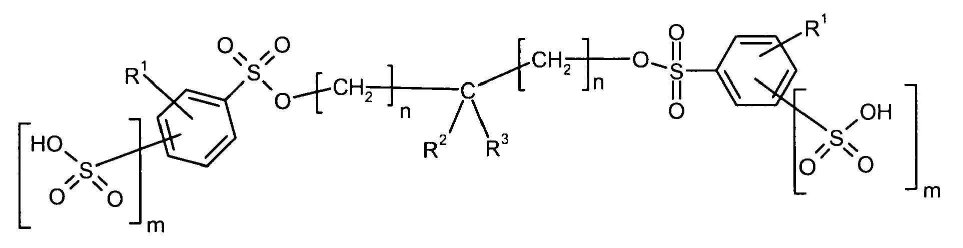 in which
the substituents R¹ independently of one another represent hydrogen or unsubstituted or halo-substituted C₁-C₂₀-alkyl,
R² and R³ independently of one another represent hydrogen, C₁-C₆-alkyl or C₄-C₃₀-alkylcarboxyl or R² and R³ represent the radical 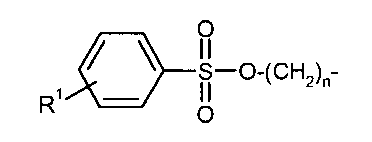 wherein
R¹ has the meaning given above,
m represents 0 or 1,
n represents an integer from 0 to 8,
b) of formula (IV) 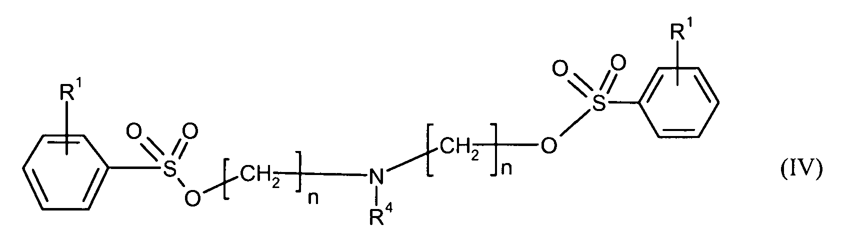 in which
R¹ and n have the meaning given above, and
R⁴ represents C₄-C₃₀-alkylcarboxyl, or
R⁴ represents the following radical 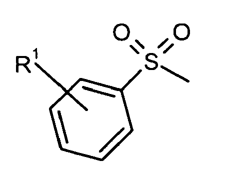
wherein R¹ has the meaning given above,
and
c) of formula (V), (VI), (VIIa), (VIIb), (Ib), (IVb) 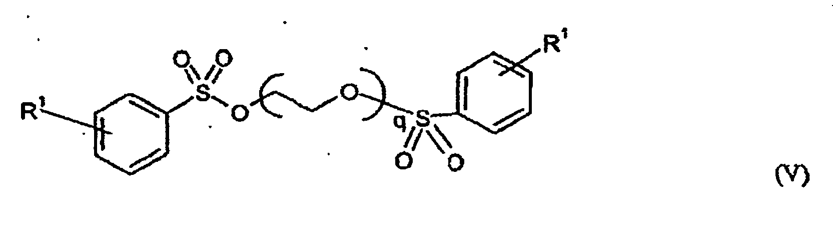 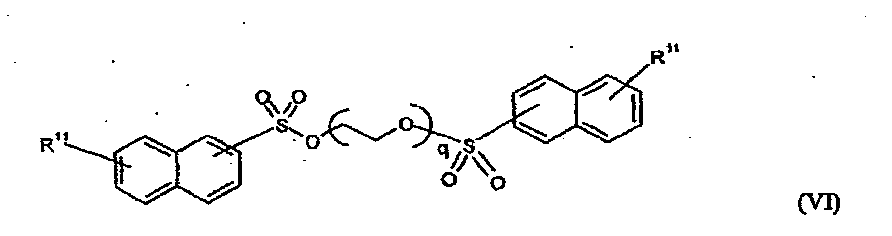 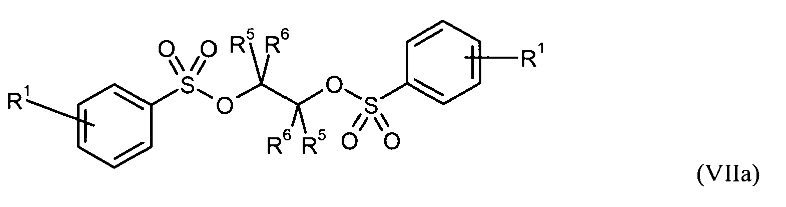 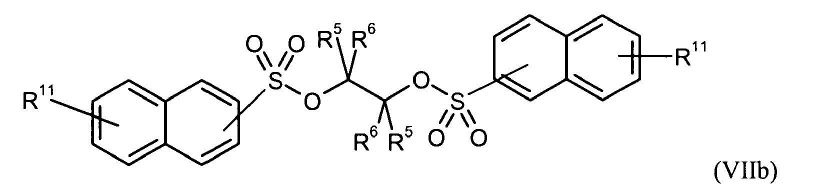 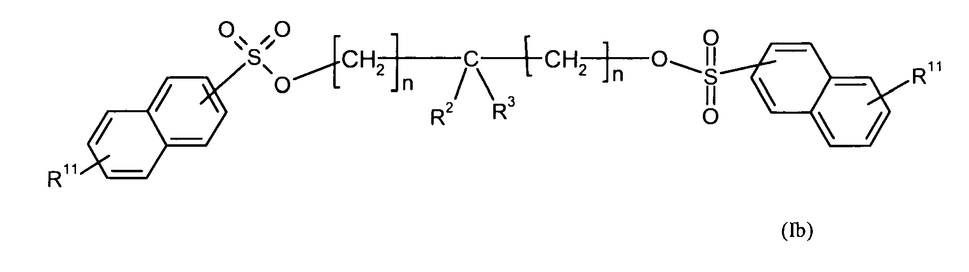 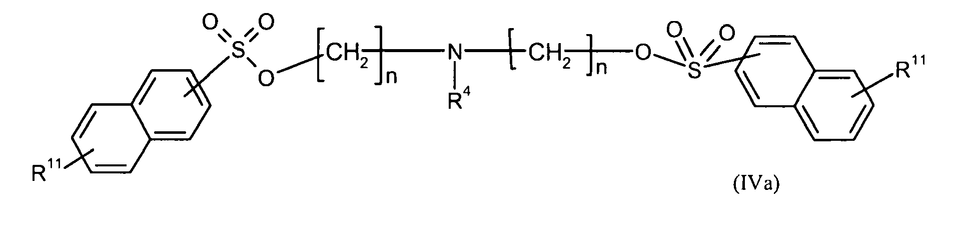
in which
R¹ and n have the meaning given above, and
q represents an integer from 0 to 10,
R⁵ and R⁶ independently of one another represent hydrogen or C₁-C₂₀-alkyl, it being possible for alkyl to be substituted by halogen, and
the substituents R¹¹ independently of one another represent hydrogen or di-(C₁-C₄)-alkylamino,
are added between medium- and high-viscosity reactor.

2. Process according to claim 1, wherein polycarbonate is prepared according to the melt transesterification process.

3. Process according to claim 1, wherein the esters of organic sulfur-containing acids are added in a positive amount of up to 100 ppm, based on the weight of the polycarbonate.

4. Use of esters of organic sulfur-containing acids according to claim 1 in the inhibition of catalytically active impurities in the preparation of polycarbonate according to the melt transesterification process.

## Revendications

1. Procédé pour la préparation de polycarbonate, **caractérisé en ce que** l'on ajoute entre un réacteur à viscosité moyenne et à viscosité élevée des esters d'acides organiques contenant du soufre choisis parmi au moins un composé
a) de la formule (I) 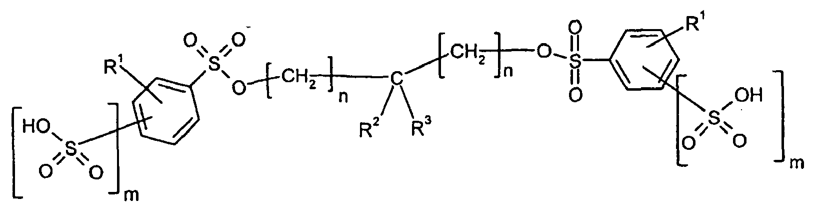 dans laquelle
R¹ représente indépendamment l'hydrogène ou un groupe alkyle en C₁-C₂₀ non substitué ou substitué par un halogène,
R² et R³ représentent indépendamment l'un de l'autre l'hydrogène, un groupe alkyle en C₁-C₆ ou alkylcarboxyle en C₄-C₃₀ ou le reste 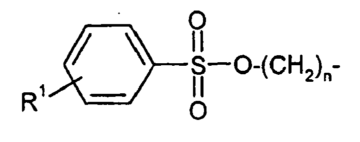 dans laquelle
R¹ a la signification citée ci-dessus,
m est égal à 0 ou à 1,
n est un nombre entier de 0 à 8,
b) de la formule (IV) 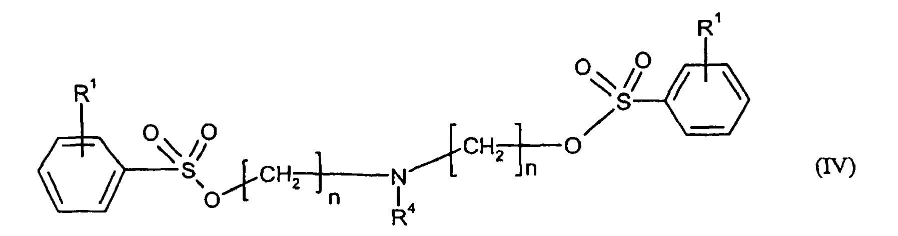 dans laquelle
R¹ et n ont la signification indiquée ci-dessus, et
R⁴ représente un groupe alkylcarboxyle en C₄-C₃₀, ou
le reste suivant 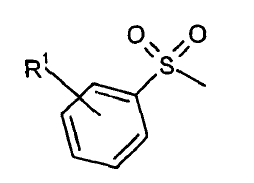 dans laquelle R¹ a la signification citée ci-dessus, et
c) de la formule (V), (VI), (VIIa), (VIIb), (Ib), (IVb) 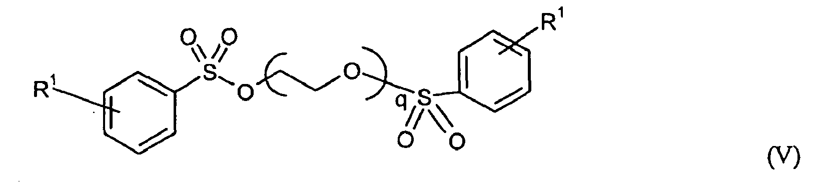 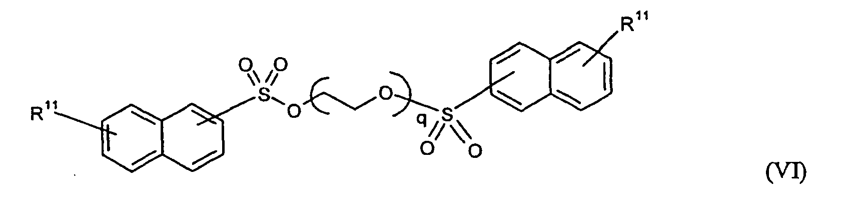 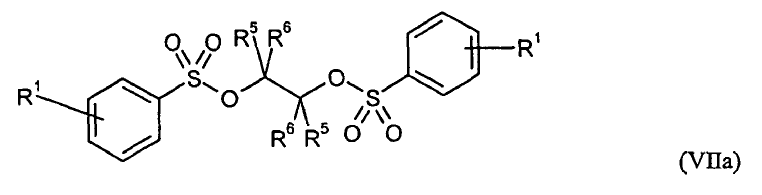 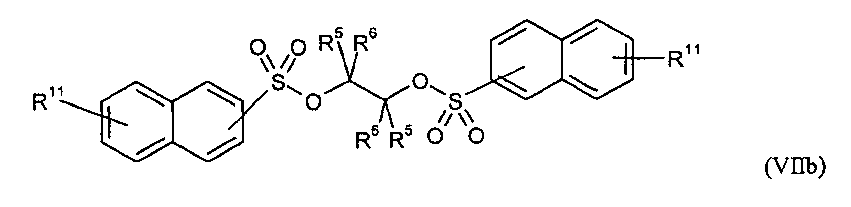 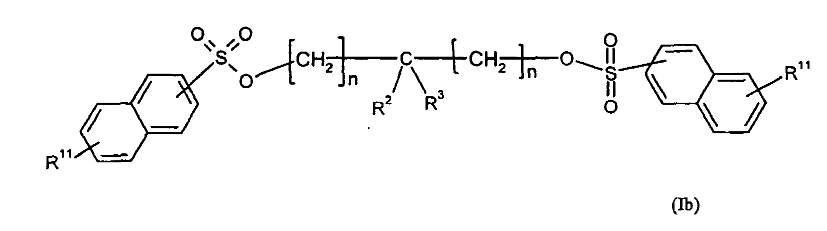 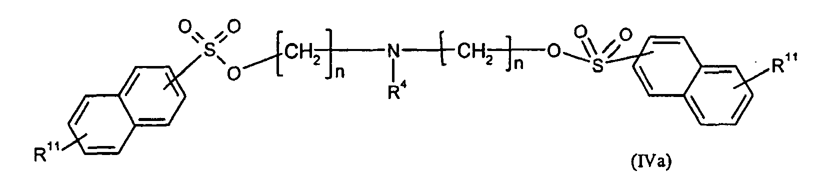
dans lesquelles
R¹ et n ont la signification citée ci-dessus, et
q représente un nombre entier de 0 à 10,
R⁵ et R⁶ représentent indépendamment l'hydrogène ou un groupe alkyle en C₁-C₂₀, le groupe alkyle pouvant être substitué par un halogène, et
R¹¹ représente indépendamment l'hydrogène ou un groupe di-(alkyle en C₁-C₄)amino.

2. Procédé selon la revendication 1, dans lequel on prépare du polycarbonate selon le procédé de transestérification de masse en fusion.

3. Procédé selon la revendication 1, dans lequel on ajoute les esters d'acides organiques contenant du soufre dans une quantité positive allant jusqu'à 100 ppm rapportée au poids du polycarbonate.

4. Utilisation d'esters d'acides organiques contenant du soufre selon la revendication 1 pour inhiber des impuretés catalytiquement actives dans la préparation de polycarbonate selon le procédé de transestérification de masse en fusion.
